# EUROPEAN PATENT APPLICATION

(11) **EP 1 536 349 A1**
(43) Date of publication of application: **01.06.2005**
(21) Application number: 02765408.6
(22) Date of filing: 03.09.2002
(51) Int. Cl.: G06F 17/30

(54) **SEARCH SYSTEM, SEARCH SERVER, CLIENT, SEARCH METHOD, PROGRAM, AND RECORDING MEDIUM**

(71) Applicant: FUJITSU LIMITED, Kawasaki-shi, Kanagawa 211-8588 (JP)
(72) Inventor: MIZUTANI, Masami FUJITSU LIMITED, Kawasaki-shi, Kanagawa 211-8588 (JP); KAZUI, Kimihiko FUJITSU LIMITED, Kawasaki-shi, Kanagawa 211-8588 (JP); MORIMATSU, Eishi FUJITSU LIMITED, Kawasaki-shi, Kanagawa 211-8588 (JP)
(74) Representative: Körfer, Thomas, Dipl.-Phys.
(86) International application number: PCT/JP2002/008943
(87) International publication number: WO 2004/023341

(57) **Abstract**

Metadata wherein characteristics descriptions for respective contents are performed is stored. A search server does not send back the whole metadata for each relevant metadata responding to a search request for the metadata from the client, but sends back part thereof. Thereby, a communications volume between the search server and the client is reduced. Further, it is possible to perform browsing wherein the metadata is sequentially obtained little by little.

## Description

### Technical Field

The present invention relates to a search processing system for performing a search request from a client through a network to a search server, and sending a search result according to this search request through the network to the client, its search server, client, search processing method, program, recording medium and the like.

### Background Art

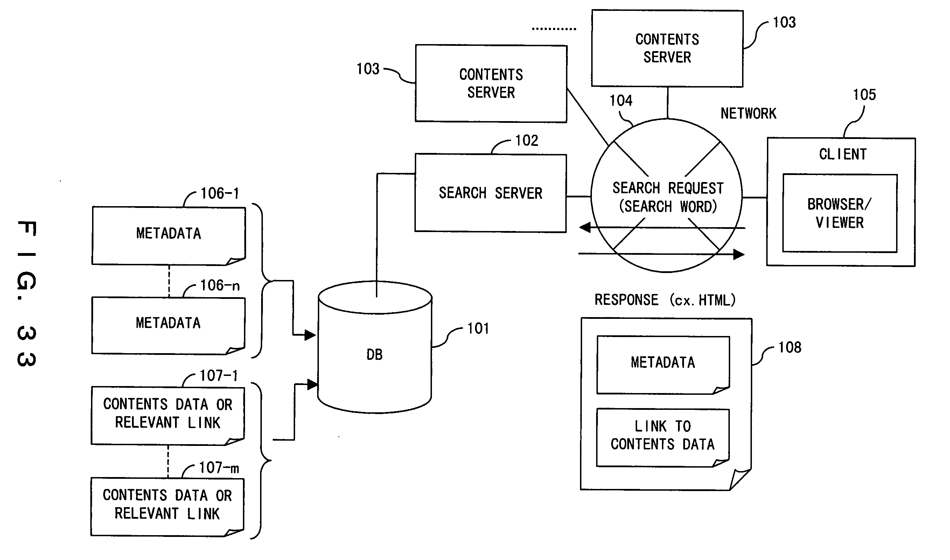

There is a vast amount of document data, image data and the like served by contents servers connected to the Internet. Systems, for example, as shown in Fig. 33 enabling keyword search for such data are well known. In Fig. 33, 101 represents a database (DB), 102 represents a search server, 103 represents a contents server, 104 represents a network, 105 represents a client, 106-1 to 106-n represent metadata stored in the database, 107-1 to 107-m represent contents data or links thereof stored in the database, and 108 represents an example of the contents of the response from the search server to the client.

This system is configured so that any given client 105 can selectively access a plurality of search servers 102 and a plurality of contents servers 103 through the network 104. When a search request by keyword is sent from the client 105 to the search server 102, the search server 102 searches the database 101, and sends metadata, contents data, or link information corresponding to the keyword as the response 108 in HTML (Hyper Text Markup Language) format to the client 105. The client 105 accesses the contents server 103 by URL (Uniform Resource Locator) or the like containing a link to the contents data included in this response 108, downloads the desired data, and display the data.

For example, in a search system of video image data, additional information (metadata: title, date of creation, performers, outline and the like) wherein characteristics of video image data are described and link information to the video image data are stored in the data base 101. Further, link information, for example, a URL (Uniform Resource Locator) constructed as protocol name://host name/file name and the like is used.

Further, since automatic recognition processing technology for describing characteristics of video image data is not established, the additional information (metadata) is concurrently used to search video image data. As a notation system for the metadata, standardization of MPEG-7 (Moving Picture Experts Group-7) (official name: description interface for multimedia contents) based on XML (Extensible Markup Language) has been promoted in the ISO (International Organization for Standardization)/IEC (International Electrotechnical Commission).

Metadata represented by this MPEG-7 is constructed from descriptors (tag) and descriptive data in order to conform to a notation system of XML. Further, as descriptive data, there is a nested form including descriptors and descriptive data, and the metadata has a logical tree structure. A logical structure having a certain meaning is referred to as a schema.

As a control means for video images, a means wherein whole video images are segmented in hierarchical fashion as a frame array, a data file correlating attribute data of the frame array with a static image of a representative frame is prepared. The frame array is extracted by using the attribute data and a hierarchical tree as a search key, and contents of the video images is guessed based on the static image of the representative frame is known (for example, refer to Japanese Unexamined Patent Application Publication No. H05-282379).

Further, a means wherein simplified images of a plurality of points such as scene change of video images are selectively sent responding to a request from a user, and browsing of the video images is performed is also known (for example, refer to Japanese Unexamined Patent Application Publication No. H09-244849). Further, a method wherein a plurality of frames of video images left in time each other are transmitted first, and thereby a user can find an outline of contents of the video images is known (for example, refer to Japanese Unexamined Patent Application Publication No. H10-294931). Further, a means wherein a highlight scene and a key frame of video images are extracted, and browsing is enabled by sending the highlight scene and the key frame without sending all video images in response to a request from a user is also known (for example, refer to Japanese Unexamined Patent Application Publication No. H11-239322).

When the foregoing MPEG-7 is applied to the description of metadata in the video image search system of the conventional example, multiple types of descriptions are enabled. Further, due to the complex logical structure, description of additional information to improve the convenience of various client applications is enabled. However, the video image search system of the conventional example does not comprise a mechanism for selecting and sending back only descriptors necessary for a specific client application. Therefore, descriptive data of descriptors useless for some client may be returned. Consequently, there is a problem that the amount of communications between a client and a search server is significantly increased by repeating browsing.

For example, when a hierarchical structure for video data for about one hour is described by using descriptors called SegmentDS (Description Schema) of MPEG-7, the data volume becomes about several 100 kB. Further, in this case, the number of tags often becomes several 100, and the number of hierarchies often becomes several 10. Therefore, there is a problem that the amount of communications between the search server and the client responding to a search request from a user is significantly increased.

Further, in the conventional search means suggested by the foregoing publications of unexamined applications and the like, the video images are segmented and browsing of the representative image is enabled. However, even if the description is made as a hierarchical structure, there is a problem that the amount of communications between the search server and the client is increased.

### Disclosure of Invention

It is an object of the invention to provide a system, a method, a program recording medium and the like, which can reduce data transfer volume, satisfy a search request from a client, enable browsing with a reduced data transfer volume by not sending at once descriptive data for all types of descriptors but selectively sending only descriptive data of the descriptor necessary for the client when the client obtains metadata from the search server.

A search processing system of the invention is constructed as a search processing system, comprising: a database for storing each metadata wherein characteristics description for each contents that a contents server holds are performed; and a search server for, responding to a search request from any given client, obtaining metadata corresponding to search conditions included in the search request from the database, extracting part of the obtained metadata according to constraint conditions included in the search request, and transmitting part of the metadata as a search result to the client.

Further, the invention can be constructed as the search server itself or the client itself.

According to the foregoing construction of the invention, the search server does not send back all the metadata, but sends back part of the metadata (does not send unnecessary/extra data). Therefore, there is an advantage that the data volume transferred between the search server and the client is reduced.

Further, in the search processing system of the invention, in order to extract the foregoing part of the metadata, for example, constraint conditions for metadata structures (in particular, time structure, hierarchy structure and the like) are used. Thereby, only the part really necessary for the client side becomes easy to be obtained.

Further, for example, when an acquisition request including path information and the constraint conditions are sent from the client, the search server extracts part or all of the remaining data of the metadata responding to the acquisition request, and sends back the data extracted from remaining data to the client.

As above, the client can sequentially obtain necessary data from the metadata. In particular, the client can search sequentially towards more detailed contents according to the foregoing hierarchy structure.

Meanwhile, the client according to the invention comprises a constraint conditions generation processing part for adding the constraint conditions for metadata structures to a search request to be transmitted to the search server.

Further, for example, as described above, the client can specify a remaining partial tree which can be obtained by extending a structure of metadata (partial tree) sent back from the search server and can obtain the remaining partial tree. In addition, the client comprises a metadata reconstruction processing part for combining this obtained partial tree with the partial tree which has already been obtained.

### Brief Description of Drawings

The invention will be clarified with reference to the after-mentioned detailed descriptions along with the following attached drawings.
Fig. 1 shows a construction of a basic configuration of the invention;
Fig. 2 is an explanation drawing on a search server side of an embodiment of the invention;
Fig. 3 is an explanation drawing of a client of the embodiment of the invention;
Fig. 4 shows an example of a data format of a request packet transmitted from the client;
Fig. 5 is a process flowchart on the server side responding to a search request command;
Fig. 6 is a process flowchart on the server side responding to an acquisition request command;
Fig. 7 is a process flowchart of a metadata filtering processing unit;
Fig. 8 is a detailed flowchart of Step S36 of Fig. 7;
Fig. 9 is a process flowchart on the client side in search request;
Fig. 10 is a process flowchart on the client side in receiving search result data;
Fig. 11 is a process flowchart on the client side in hypothetical sub-node acquisition request;
Fig. 12 is a process flowchart on the client side in receiving browsing data;
Fig. 13A, 13B is an explanation drawing of an example of metadata;
Fig. 14A, 14B is an explanation drawing in hierarchy structure specification;
Fig. 15A, 15B, 15C is an explanation drawing in time structure specification;
Fig. 16A, 16B is an explanation drawing in partial tree specification;
Fig. 17A, 17B is an explanation drawing in hierarchy structure specification of a partial tree;
Fig. 18A, 18B, 18C is an explanation drawing in time structure specification of a partial tree;
Fig. 19A, 19B is an explanation drawing in remaining data specification
Fig. 20 is a view (No. 1) showing a specific example of an XML schema definition;
Fig. 21 is a view (No. 2) showing a specific example of the XML schema definition;
Fig. 22 is a view (No. 3) showing a specific example of the XML schema definition;
Fig. 23 is an explanation drawing of the metadata;
Fig. 24 is an outline explanation drawing of a tree structure of the metadata;
Fig. 25 is a view showing an example of the metadata provided with a filtering process;
Fig. 26 is a view showing an example of data included in an hypothetical sub-node request command;
Fig. 27 is a view showing an example of data sent back from the search server responding to the request of Fig. 26;
Fig. 28 is an explanation drawing of a structure related to a time axis;
Fig. 29 is an explanation drawing of GUI of the client;
Fig. 30 is an explanation drawing of display template data;
Fig. 31 is a construction drawing of a computer hardware;
Fig. 32 is an explanation drawing of a storage medium recording a program/download; and
Fig. 33 is an explanation drawing of a system construction of a conventional example.

### Best Mode of Carrying Out the Invention

Descriptions will be hereinafter given of an embodiment of the invention with reference to the drawings.

"Metadata" herein referred does not mean metadata as additional information wherein characteristics of video image data are described (metadata: title, date of creation, performers, outline and the like) as in the foregoing related art, but means metadata having a comparatively large data volume. For example, "metadata" herein means metadata as defined by, for example, MPEG-7 or 21.

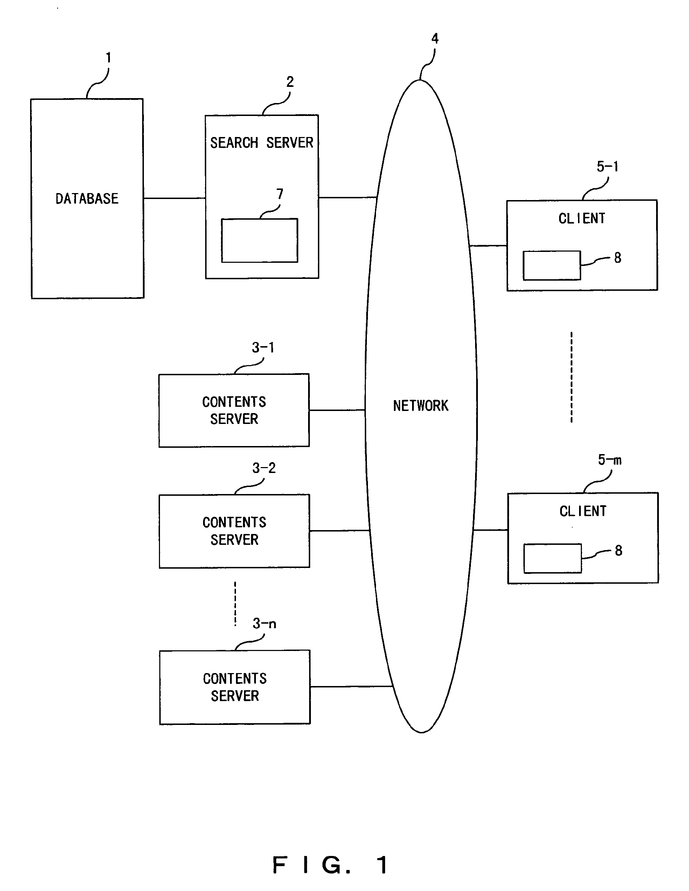

Fig. 1 shows a construction of a basic configuration of the invention. 1 represents a database, 2 represents a search server, 3-1 to 3-n represent contents servers, 4 represents a network, 5-1 to 5-m represent clients, 7 represents a filtering processing unit, and 8 represents a constraint conditions generation processing unit.

An entity of contents data and an entity of metadata specified by a contents identifier and a metadata identifier are stored on the contents servers 3-1 to 3-n. Further, the metadata is constructed from descriptors and descriptive data. The descriptive data can be configured as a nesting form including the descriptors. A descriptive form of XML and MPEG-7 can be applied.

The database 1 has a construction wherein contents identifiers and metadata identifiers of contents to be searched, which are retained in the contents servers 3-1 to 3-n are stored with keywords. The keyword can be obtained by performing a keyword extraction process from descriptors and descriptive data in metadata obtained from the contents servers 3-1 to 3-n through the network 4. In this keyword extraction process, in the case that the descriptive data is text data, a keyword can be extracted by applying a process such as Morphological analysis (a part-of-speech analysis). Further, in the case of the descriptive data is numerical value data, such numerical value data can be used as a keyword as it is. Further, in the case of the descriptor of the metadata, a descriptor name is obtained when structural analysis of the metadata is processed, and the obtained descriptor name is used as a keyword.

As a contents identifier and a metadata identifier, a URL and the like specifying the location of the data (contents/metadata) can be used. The foregoing construction is only an example, and the invention is not limited to this example. For example, it is possible that the database 1 further stores the entity of the metadata and the entity of the contents. Further, it is possible that the search server 2 includes the database 1, or the search server 2 includes both the database 1 and the contents server 3.

"Search processing system" means a system including the client 5, the database 1, and the search server 2 in the wide sense, or means a system having the database 1 and the search server 2 in the narrow sense.

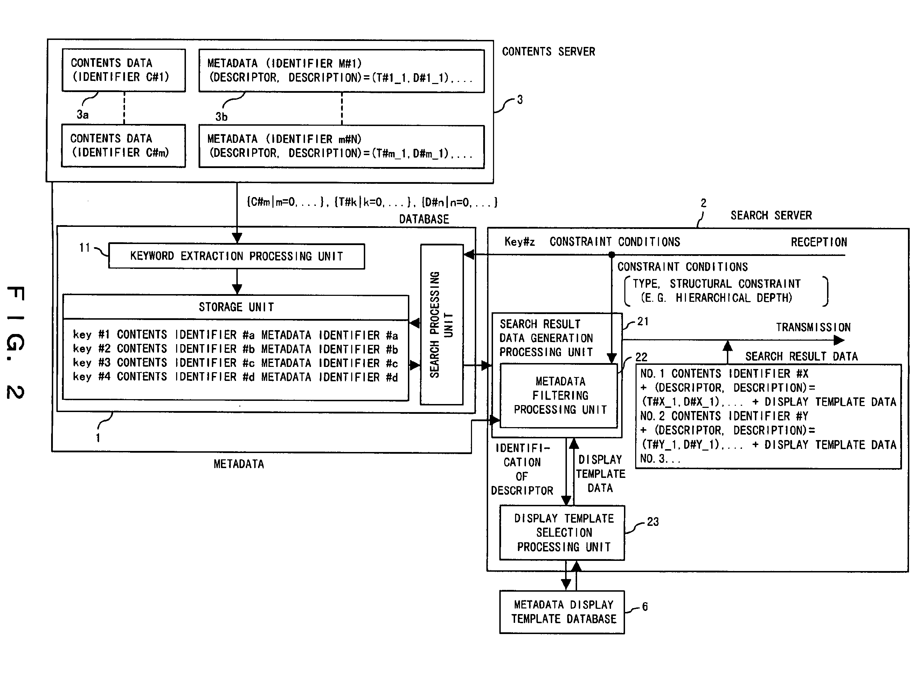

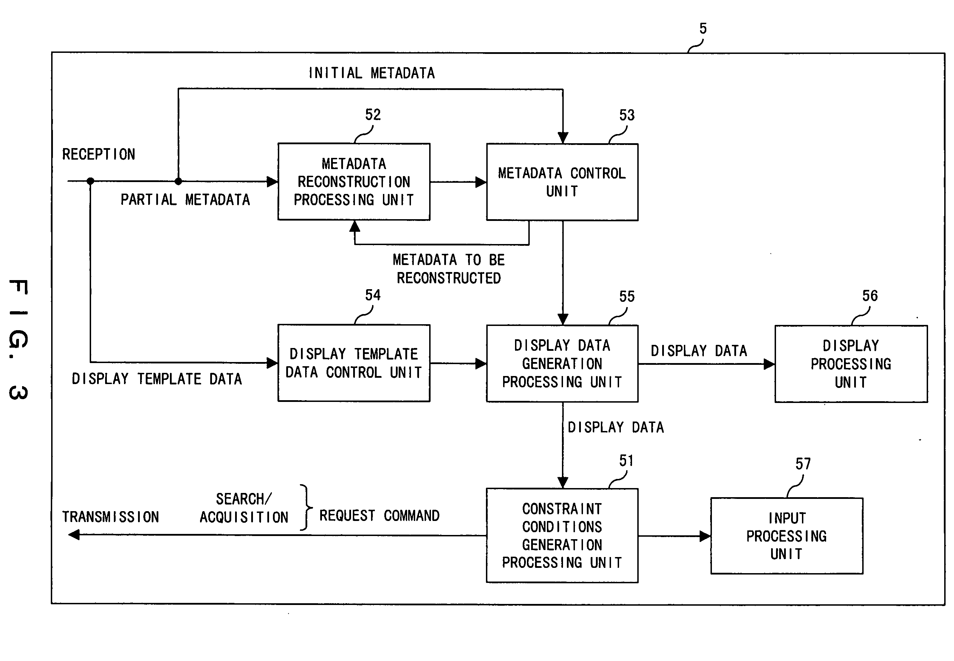

Fig. 2 is an explanation drawing on the search server side in the embodiment of the invention. Fig. 3 is an explanation drawing of the client in the embodiment of the invention. A functional part corresponding to the network 4 of Fig. 1 is not shown.

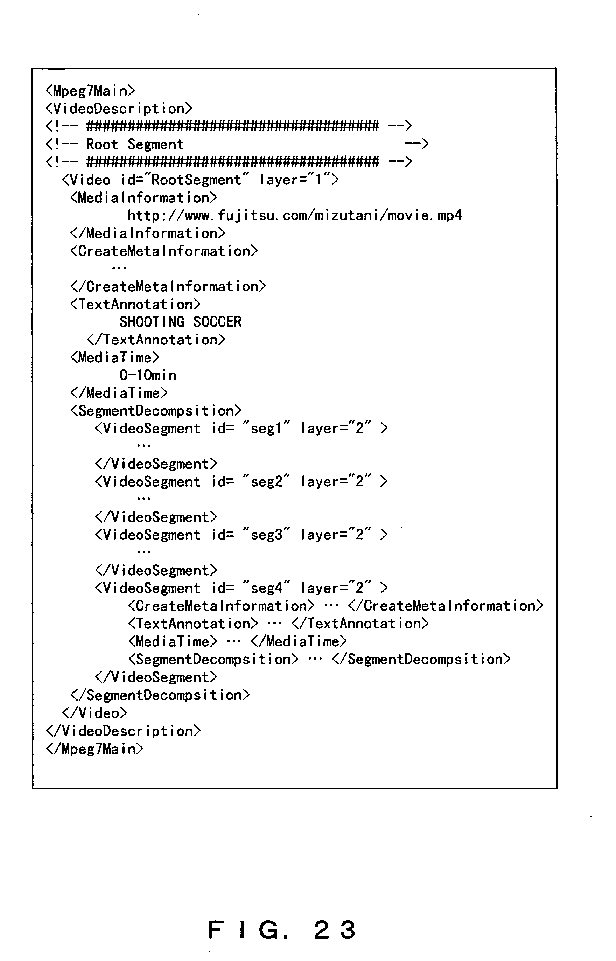

In Fig. 2, 1 represents the database, 2 represents the search server, 3 represents the contents server, 6 represents a metadata display template database, 11 represents a keyword extraction processing unit, 12 represents a recording unit, 13 represents a search processing unit, 21 represents a search result data generation processing unit, 22 represents a metadata filtering processing unit corresponding to the filtering processing unit 7 of Fig. 1, and 23 represents a display template selection processing unit.

Further, 3a represents contents data including an identifier such as C#1, etc., and 3b represents metadata including an identifier such as M#1, etc.. These data is stored in the contents server 3.

The database 1 includes the keyword extraction processing unit 11, the recording unit 12, and the search processing unit 13.

As described above, the keyword extraction processing unit 11 accesses to the respective contents servers 3 through the network, and extracts a keyword from the contents data 3a and the metadata 3b stored in the contents server 3. Then, a contents identifier and a metadata identifier are stored in the recording unit 12 with a keyword key #i, such as "key #1 contents identifier #a metadata identifier #a," "key #2 contents identifier #b metadata identifier #b," and "key #3 contents identifier #c metadata identifier #c."

Here, as described later, the client 5 transmits a search request having search conditions and constraint conditions to the search server 2. The search server 2 passes the search conditions to the search processing unit 13.

The search processing unit 13 searches the recording unit 12 according to the search conditions (keyword and the like) passed from the search server 2, and transmits items corresponding with the search conditions (contents identifier and metadata identifier thereof) to the search server 2.

The search server 2 has the search result data generation processing unit 21, the metadata filtering processing unit 22, and the display template selection processing unit 23.

Here, the metadata display template database 6 stores display template data for defining a display form corresponding to each schema type.

The display template selection processing unit 23 selects and obtains a display template corresponding to a schema of metadata to be transmitted to the client 5 from the metadata display template database 6. As described later, the search result data generation processing unit 21 sends this display template data in addition to filtering-processed search result data through the unshown network to the client requesting the search.

The metadata filtering processing unit 22 uses the metadata identifier as a search result sent from the foregoing search processing unit 13 to obtain metadata (entity of metadata) corresponding to the metadata identifier from the contents server 3. Then, the metadata filtering processing unit 22 executes filtering processes for this metadata (or for a plurality of metadata respectively) according to the foregoing constraint conditions.

The search result data generation processing unit 21 sends the search result data including the foregoing filtering-processed metadata (part of metadata: referred to as partial metadata or partial tree) and the display template data to the client requesting the search. For example, the search result data is sent to the client requesting the search as a construction correspondingly showing No. 1 contents identifier #x, {(descriptor, descriptive data) = (T#x1, D#x_1),...}, and display template data. The partial metadata (partial tree) is constructed from partial data and a partial structure. It is possible to further give information (for example, a descriptor of a sub-node of this partial metadata) for client side determination of the existence of a partial tree existing under this partial metadata in the view of this partial metadata (hypothetical partial tree in the view of the client side).

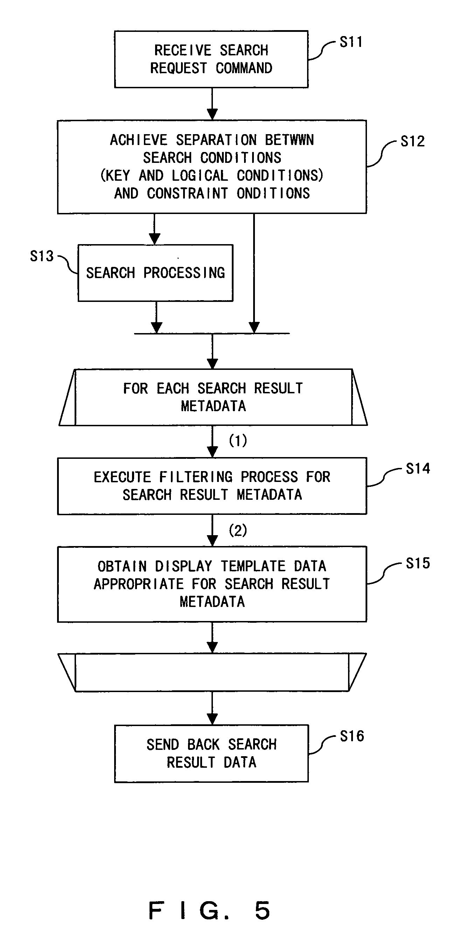

In Fig. 3, 5 represents the client, 51 represents the constraint conditions generation processing unit corresponding to the constraint conditions generation processing unit 8 of Fig. 1, 52 represents a metadata reconstruction processing unit, 53 represents a metadata control unit, 54 represents a display template data control unit, 55 represents a display data generation processing unit, 56 represents a display processing unit, and 57 represents an input processing unit.

The constraint conditions generation processing unit 51 generates and sends a search request command or an acquisition request command according to conditions (search conditions, constraint conditions and the like) input from the input processing unit 57 to the search server 2 through the network (not shown) .

Then, the search server 2 sends back metadata (initial partial metadata) through the network responding to the search request command. The client 5 forwards the metadata as it is to the metadata control unit 53, where the metadata is stored. Or, the client 5 forwards metadata (additional partial metadata) sent back from the search server 2 responding to the acquisition request command to the metadata reconstruction processing unit 52, wherein reconstruction processing is performed. Further, the display template data is forwarded to the display template data control unit 54.

The display data generation processing unit 55 generates display data based on the metadata stored in the metadata control unit 53 and the display template data stored in the display template data control unit 54. Then, the display data generation processing unit 55 forwards the display data to the display processing unit 56 and the constraint conditions generation processing unit 51. The display processing unit 56 control displaying images and the like according to the display data on display unit (not shown).

Further, though not particularly related to this example, it is possible to obtain and display contents data (video images and the like) from the contents server and the like by using the contents identifier included in the data sent back from the search server 2.

Descriptions will be hereinafter given of processes on the search server 2 side shown in Fig. 2 and processes on the client 5 side shown in Fig. 3 as described above with reference to flowcharts of Figs. 5 to 12.

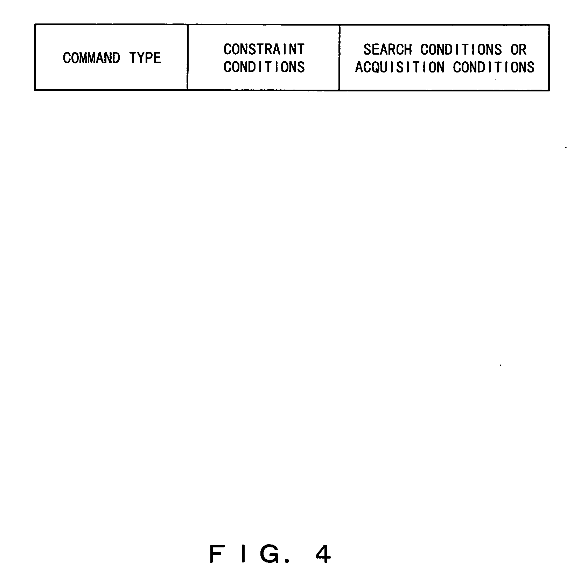

Here, before the descriptions, an example of a data structure of the request command transmitted to be search server 2 when the client 5 requests a search is shown in Fig. 4. In the example shown in Fig. 4, the request command is constructed from a command type, constraint conditions, and search conditions or acquisition conditions.

The command type is one of "search request" and "acquisition request for hypothetical partial tree (sub-node) ." In the following descriptions, a request command whose command type is "search request" will be referred to as the search request command, and a request command whose command type is " acquisition request for hypothetical partial tree (sub-node) " will be referred to as the acquisition request command.

In the case of the search request command, the constraint conditions and the search conditions are added. In the case of the acquisition request command, the constraint conditions and the acquisition conditions are added. The acquisition conditions are, for example, position information (for example, Xpath described later) of the hypothetical partial tree and the like. The search conditions are, for example, keywords and the like. The constraint conditions are, for example, conditions for metadata structures (time structure, hierarchy structure and the like), which will be described in detail later.

Fig. 5 is a flowchart for explaining a procedure on the search server 2 side shown in Fig. 2.

In Fig. 5, when the search server 2 receives a search request command from the client 5 (Step S11), first, the search server 2 achieve separation between the constraint conditions and the search conditions shown in the foregoing Fig. 4 (Step S12). Then, the server 2 passes the search conditions (keyword and the like) to the database 1. The search processing unit 13 searches the recording unit 12 according to the search conditions (keyword and the like), and sends back a metadata identifier and a contents identifier corresponding with the search conditions to the search server 2 (Step 13). As described above, metadata (entity) can be stored in the database 1. In this case, each metadata is searched according to the search conditions (keyword and the like), and metadata having contents corresponding with the search conditions is sent back to the search server 2 side. However, the example for searching the recording unit 12 is herein described.

The search server 2 obtains metadata from the contents server 3 by using the metadata identifier sent back from the search processing unit 13. Then, the search server 2 repeats and executes the processes of Steps S14 and S15 by using the constraint conditions separated in the foregoing Step S12 for each metadata.

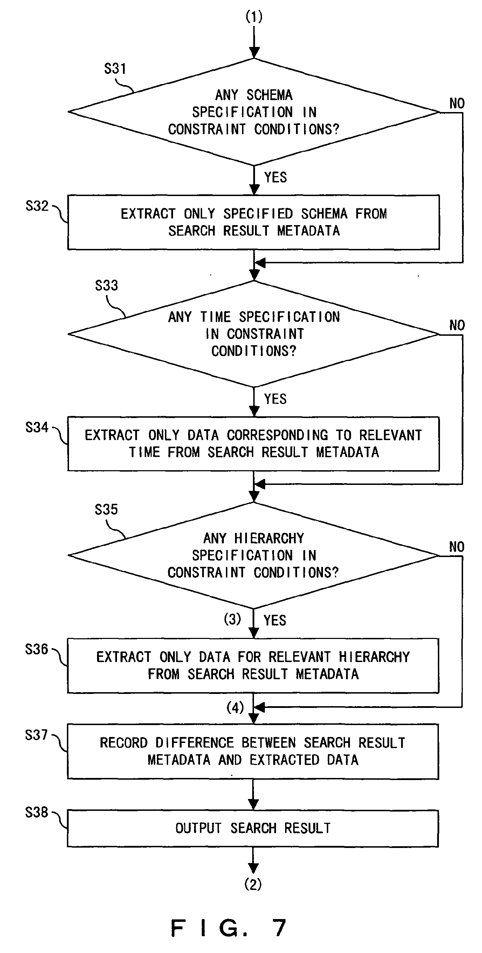

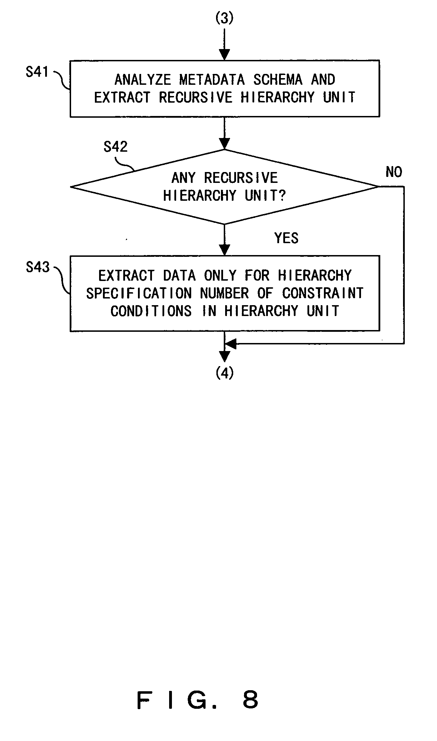

First, the metadata filtering processing unit 22 executes a filtering process on the metadata (Step S14). Details of the process of Step S14 are shown in Figs. 7 and 8, and will be described later.

Next, the display template selection processing unit 23 selects and obtains display template data appropriate for the metadata from the metadata display template database 6 (Step S15).

After the foregoing processes of Steps S14 and S15 are executed for all the obtained metadata, the search result data generation processing unit 21 sends back partial metadata (partial tree) obtained as a filtering-processed result as a search result to which the contents identifier and the display template data thereof are added to the client (Step S16).

Further, as described above, part of the metadata is sent back to the client 5 by the filtering process.

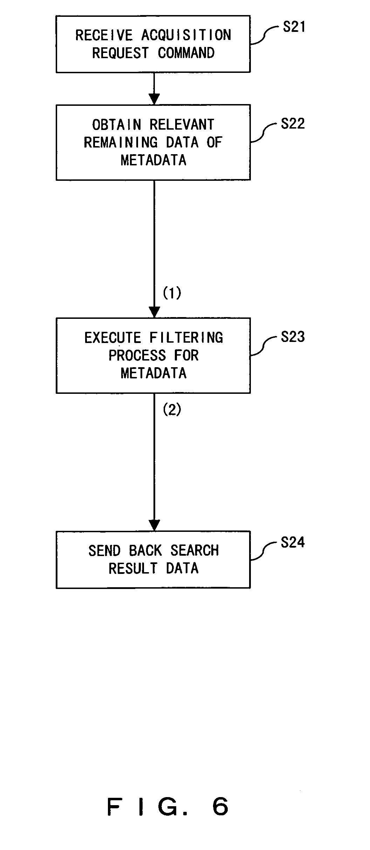

An acquisition request regarding part or all of remaining metadata (remaining data) may be sent from the client 5 later. Therefore, the remaining data is retained on the search server 2. When an acquisition request command regarding the foregoing remaining data is sent from the client 5 side, the search server 2 executes processes shown in Fig. 6.

That is, when the search server 2 receives the acquisition request command from the client 5 (Step S21), the search server 2 obtains relevant metadata (remaining data) from the metadata (remaining data) retained as above (Step S22). The search server 2 executes a filtering process on the obtained metadata (Step S23), and sends back a process result (part or all of the remaining data) to the client 5 (Step S24).

As above, the client 5 side can obtain and display part of the metadata little by little as needed. That is, a user on the client 5 side can visually check (browsing) only the necessary parts in stages.

Next, descriptions will be hereinafter given of details of the process of Step S14 by the metadata filtering processing unit 22 with reference to the process flowchart of Fig. 7. Further, Fig. 8 shows a detailed process flowchart of Step S36 of Fig. 7.

The processes of Fig. 7 are executed based on the foregoing constraint conditions for each metadata obtained from the contents server 3 by using the metadata identifier sent back from the foregoing search processing unit 13.

First, the metadata filtering processing unit 22 refers to the foregoing constraint conditions, and determines whether schema specification exists or not in the constraint conditions (Step 31) . When the schema is specified (determination result of Step S31: YES), only the specified schema is extracted from the metadata (Step S32). Next, whether a time specification exists or not in the constraint conditions is determined (Step S33). When the time is specified (determination result of Step S33: YES), only data corresponding to the specified time (time range) is extracted from the metadata (Step S34). Next, whether a hierarchy specification exists or not is determined (Step S35). When the hierarchy is specified (determination result of Step S35: YES), only data for the specified hierarchy is extracted from the metadata (Step S36).

Here, one or more conditions of the foregoing schema specification, the time specification, and the hierarchy specification are specified as the constraint conditions. Therefore, not only one thereof, but also two or three thereof may be specified. If all three thereof are specified, only data corresponding to the specified time is further extracted from the schema extracted in Step S32 (S34), and only the specified hierarchy data is further extracted from the data extracted in this Step 34 (Step S36).

The complete metadata is compared to the partial metadata extracted from the foregoing processes up to Step S36, and the difference thereof (remaining data) is recorded (S37). The foregoing filtering process result (partial metadata) is output as a search result (Step S38).

Details of the process of the foregoing Step S36 will be hereinafter described with reference to Fig. 8.

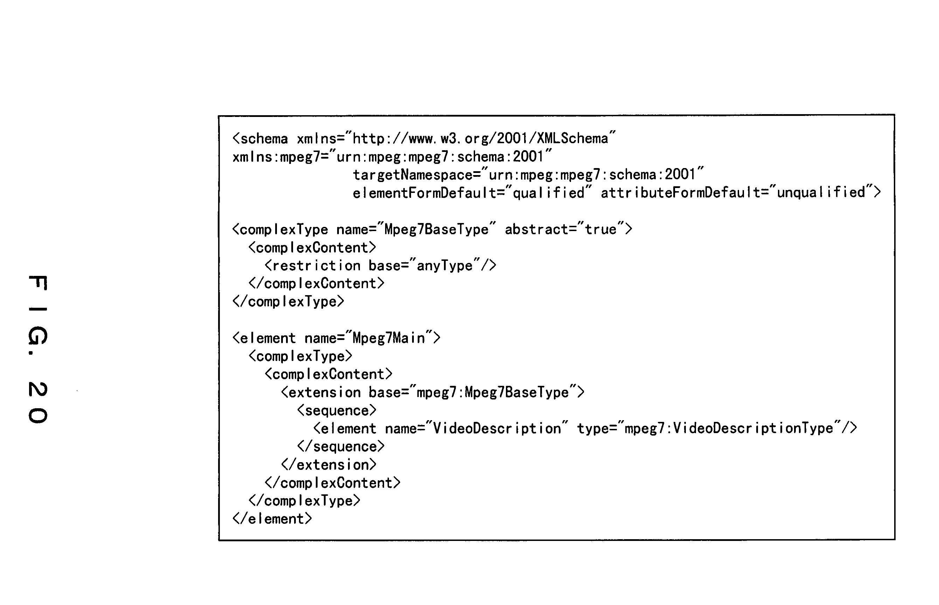

First, a trial attempt is made to extract a recursive hierarchy unit by analyzing schema definition contents with reference to a schema definition file of the metadata (Step S41). If the recursive hierarchy unit exists (determination result of S42: YES), only the data for the hierarchy specification number of the constraint conditions is extracted from the metadata in the hierarchy unit (Step S43). For the processes of Fig. 8, details will be described later with reference to specific examples shown in Figs. 20 to 23.

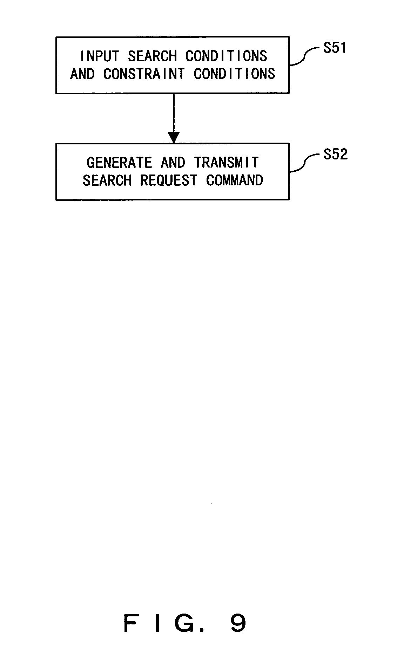

Figs. 9 to 12 are flowcharts explaining a procedure in the client 5 shown in Fig. 3.

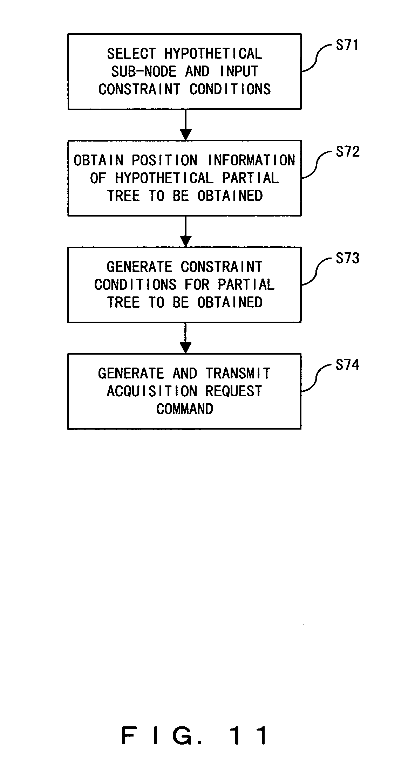

Figs. 9 and 11 are process flowcharts of the constraint conditions generation processing unit 51 of the client 5. Fig. 9 is a process flowchart relating to the search request command, and Fig. 11 is a process flowchart relating to the acquisition request command.

In Fig. 9, first, a user or the like inputs desired search conditions and constraint conditions through the input processing unit 57 (for example, keyboard or mouse) (Step S51). The constraint conditions generation processing unit 51 generates the search request command described in Fig. 4 responding to the input contents, which is transmitted to the search server 2 (Step S52).

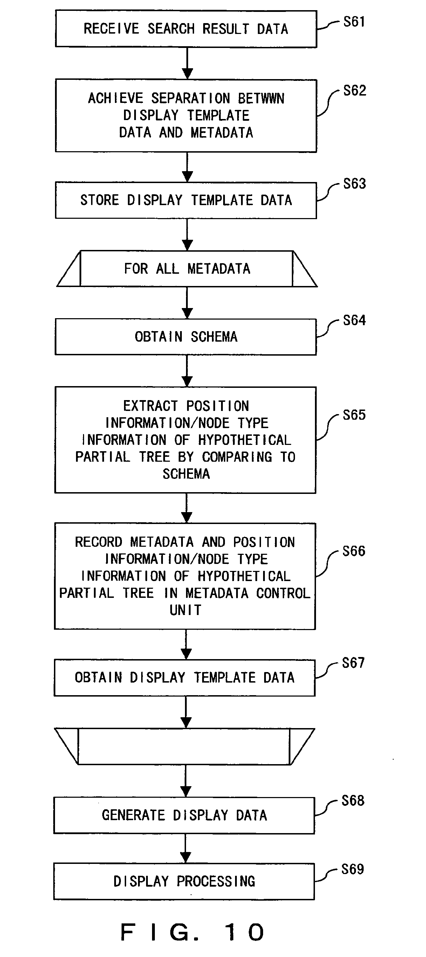

Fig. 10 is a overview process flowchart of the client 5 when search result data sent back from the search server 2 responding to the foregoing search request command is received. The processes of Fig. 10 are controlled by whole control unit (not shown in Fig.3).

In Fig. 10, after the client 5 receives the search result data (Step S61), first, the client 5 achieve separation between display template data and metadata (initial partial metadata), which construct the search result data (Step S62), and stores the display template data in the display template data control unit 54 (Step S63).

Then, the processes of Steps S64 to S67 are executed for each metadata.

That is, first, a schema definition file of the metadata is obtained (Step S64). The schema definition of the metadata can be described by well-known "XML Scheme" (XML schema definition), a specific example thereof will be shown later. Here, the schema definition file of the metadata is obtained from the search server 2. However, the schema definition file of the metadata may be previously retained in the client 5. As is well known, "XML Scheme" has only recently become used for structure definition of XML documents instead of DTD (Document Type Definition).

Based on the obtained schema definition, the metadata is verified, and whether an hypothetical partial tree exists or not is determined. As described above, the partial metadata sent back from the search server 2 is provided with information for determining the existence of the hypothetical partial tree (descriptor and the like of a sub-node of the partial metadata). Whether there is possibility that the hypothetical partial tree exists or not is determined with reference to the information and the XML schema definition file or the like. When the hypothetical partial tree exists, its position information/node type information and the like are extracted (Step S65). Then, the metadata is stored in the metadata control unit 53 with the extracted position information/node type information of the hypothetical partial tree (Step S66). The position information is, for example, path information from a top tag (root node) of the whole metadata to the hypothetical partial tree. The node type information is type information for a node (tag) of the hypothetical partial tree.

When the metadata is displayed, display template data is obtained (Step S67), display data is generated (Step s68), and display processing is performed (Step S69).

As described above, Fig. 11 is a process flowchart for the acquisition request command.

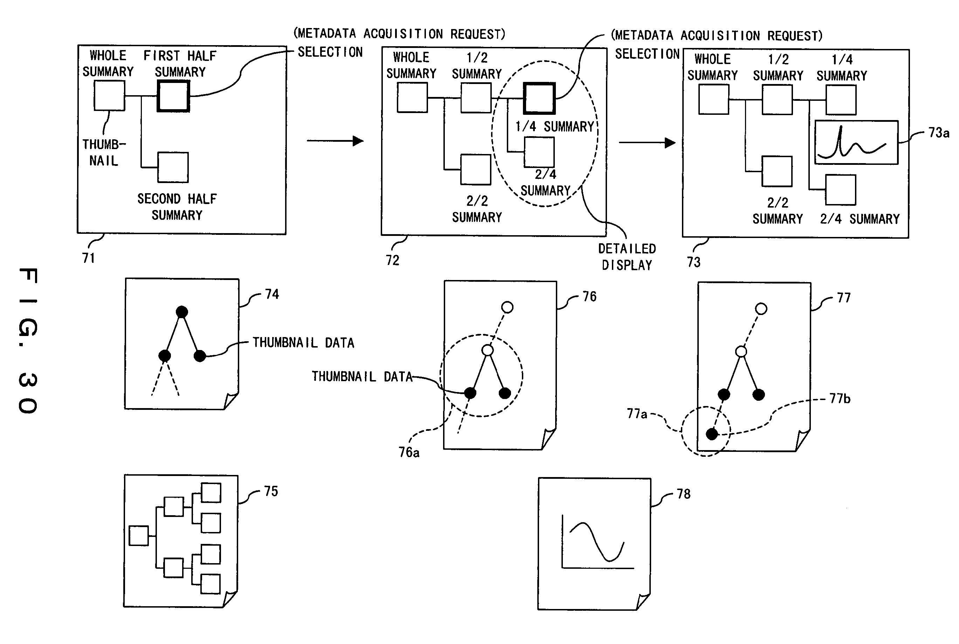

In Fig. 11, first, a user or the like of the client 5 selects an hypothetical partial tree (sub-node) to be requested through the input processing unit 57 with reference to display of the display processing unit 56 (for example, display shown in Fig. 30 described later), and then inputs further desired constraint conditions (Step S71).

Responding to this input, the client 5 obtains position information of the foregoing selected hypothetical partial tree from the metadata control unit 53 (S72), and generates constraint conditions for this hypothetical partial tree (Step S73). The client 5 generates the acquisition request command by using these position information/constraint conditions, and transmits the acquisition request command to the search server 2 (Step S74).

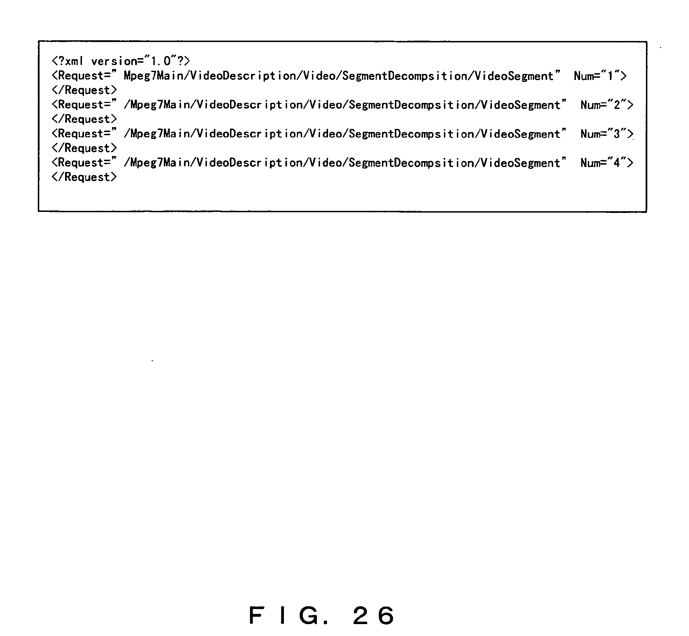

The foregoing position information is, for example, path information described later ("Xpath" and the like shown in Fig. 26).

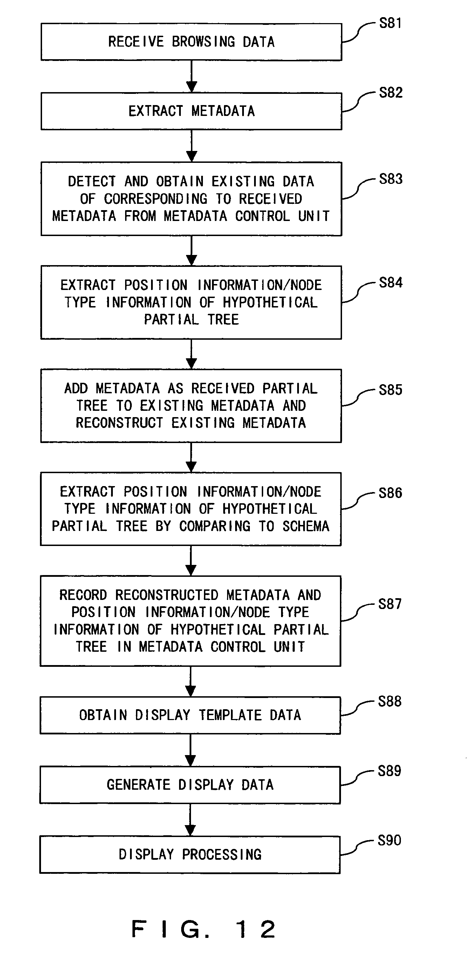

Fig. 12 is a flowchart of the complete process when the client 5 receives browsing data sent back from the search server 2 responding to the foregoing acquisition request command of Fig. 11. The process of Fig. 12 is controlled by the whole control unit (not shown in Fig. 3).

In Fig. 12, when the client 5 receives the foregoing browsing data (Step S81), the client 5 extracts metadata (part of remaining data: partial metadata) from the received data (Step S82).

Next, processes of Steps S83 to S85 are executed by the metadata reconstruction processing unit 52. First, the received partial metadata should be combined with the partial metadata already stored in the metadata control unit 53 (hereinafter referred to as existing metadata). Therefore, the existing metadata is obtained from the metadata control unit 53 (Step S83). Then, it is possible to determine a position among the existing metadata to which the received partial metadata should be added by extracting position information /node type information of the hypothetical partial tree (Step 84). The existing metadata is reconstructed by adding the received partial metadata to such a position (Step S85).

Next, regarding the reconstructed existing metadata, position information/node type information of an hypothetical partial tree is extracted with reference to a schema definition file as in the foregoing Step S65 (Step S86). That is, whether the hypothetical partial tree further exists or not in a hierarchy under the received partial metadata is determined. When the hypothetical partial tree exists, position information/node type information of the hypothetical partial tree is extracted. The reconstructed existing metadata and the extracted position information/node type information of the hypothetical partial tree is stored in the metadata control unit 53 (Step S87).

Subsequently, as in Steps S67 to S69 of Fig. 10, display template data appropriate to the foregoing metadata is read from the display template data control unit 54 (Step S88), display data is generated (Step S89), and a process to display the display data is executed (Step S90).

Specific and detailed descriptions will be hereinafter given.

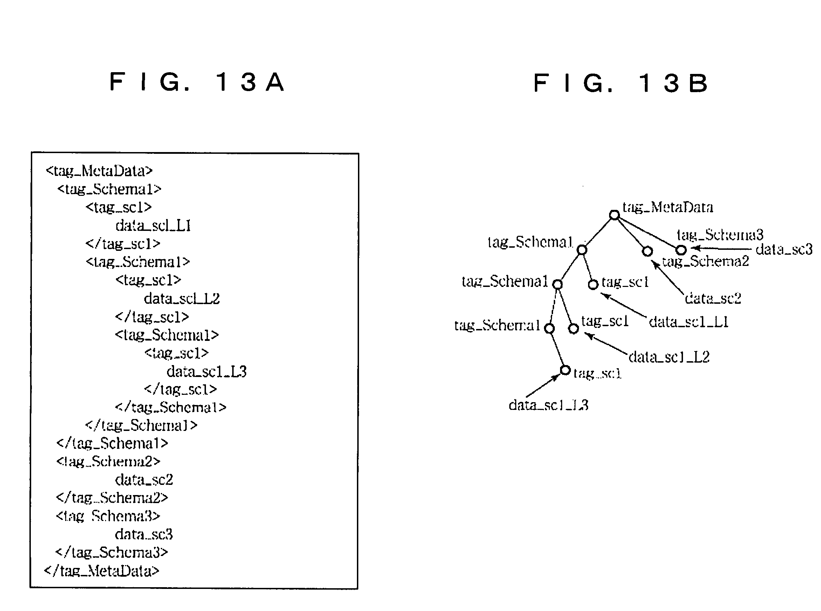

The metadata is constructed from descriptors and descriptive data, and complies with XML. The descriptor can be expressed by a tag such as <tag_MetaData>, <tagSchema1> shown in Fig. 13A. In this case, the tree structure shown in Fig. 13B is constructed. A node of this tree structure corresponds to the tag shown in Fig. 13A. A root node means a top level tag of the metadata. A branch means existence of a nested tag. A sub-node means a nested tag. Only the terminal leaf node has no nested tag, which means the terminal leaf node has only descriptive data. In general, metadata starting from the root node is stored in one or a plurality of files. When the metadata is divided and stored in a plurality of files, the dependence relation is described by a tag describing the existence relation of the files, leading to a state equivalent to the case that the metadata is stored in one file.

Examples of search targets include text data and/or numerical value data (keyword) obtained by analysis processing (natural language processing and the like) of a character string constructing a tag name in the metadata and descriptive data, in addition to an identifier of contents (URL and the like), an identifier of a metadata file including a root node (URL and the like) . In the case of the example shown in Fig. 13A, character strings of tag_MetaData, tag_Schema1, tag_Schema2, tag_Schema3 become keywords, or text data or numerical value data obtained by analyzing data such as tag_sc1; and data_sc1_L1, data_sc1_L2, data_sc1_L3, data_sc2, and data_sc3 become keywords.

The constraint conditions generation processing unit 51 of the client 5 generates a search request command including a command type, search conditions, and constraint conditions. Otherwise, the constraint conditions generation processing unit 51 of the client 5 generates an acquisition request command including a command type, constraint conditions, and position information of a partial tree to be obtained (Xpath or the like described later). Either the search request command or the acquisition request command is sent through the network to the search server 2.

As described above, the metadata filtering processing unit 22 of the search server 2 selects data corresponding to the constraint conditions from metadata corresponding with the search conditions, or metadata corresponding with the acquisition request, which are requested from the client 5.

As search conditions, search words can be specified. When a plurality of search words exist, logical conditions (AND, OR, NOT, or combinations thereof) can be specified. For example, as (type (search), search words (logical conditions, search words), (search, (key1 AND key2) OR key3)) can be used. That is, an AND condition between the keywords key1 and key 2 and an OR condition in relation to key3 can be specified.

The constraint conditions include a constraint type and constraint values such as a time range and a hierarchical depth.

As constraint conditions for structures for search request, examples of the constraint type include scope specification, hierarchy structure specification, and time structure specification.

Regarding the foregoing scope specification, a schema type of the search target can be specified. A plurality of schema types can be specified by logical conditions (AND, OR, NOT, or combinations thereof). For example, as (constraint type, schema type (logical conditions, schema type), (scope, tag_Schema1 AND tag Schema2)) can be used.

Further, as a hierarchy structure specification, when the scope-specified schema definition is recursively defined, a hierarchy can be specified from the top level node of the schema.

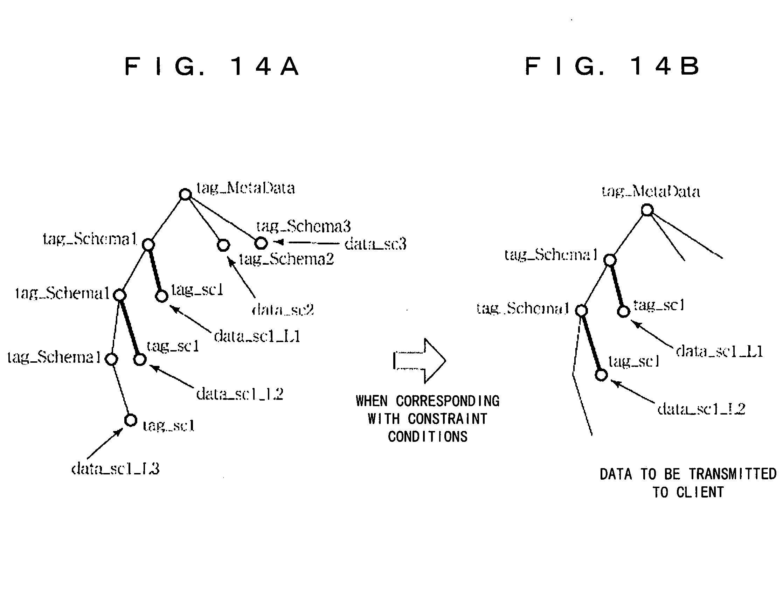

For example, as (constraint type, (schema type, hierarchy number)), (level, (tag_Schema1, 2) can be used. In relation to tag_Schema1 of the recursively defined schema in this case, a range shown by heavy lines up to the second hierarchy of the tree structure of Fig. 14A becomes a search target. When the search target corresponds to the search conditions, a structure constructed from a partial tree from the root node to tag_Schema1 and the range up to the second hierarchy in relation to tag_Schema1, that is, the data shown in Fig. 14B is transmitted to the client.

Further, as a time structure specification, when the scope-specified schema is provided with a structure description related to a running time axis, time interval information can be specified for providing structure limits. For example, (constraint type, (schema type, time interval, internal side/inclusion),...), (time, (tag_Schema1, 400-450, inclusion)) can be used.

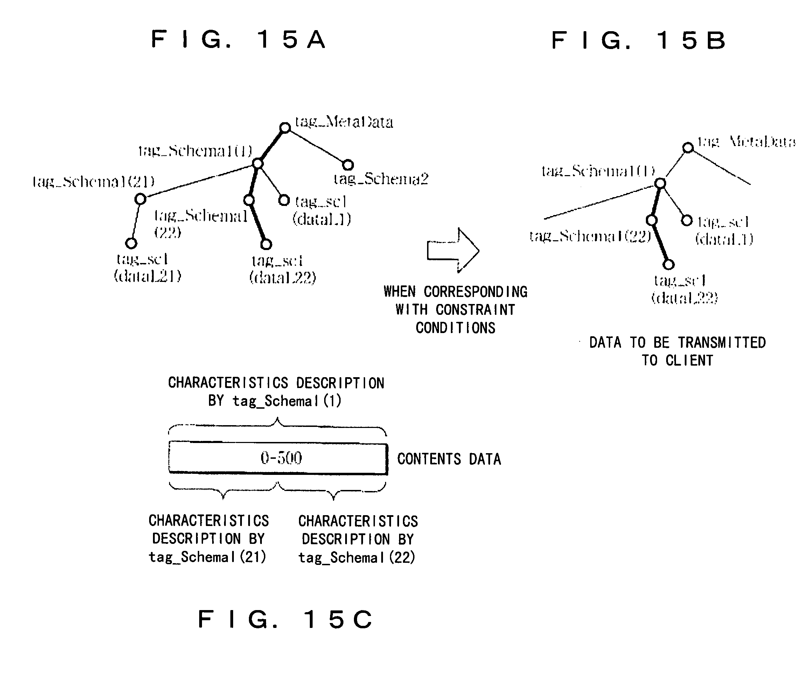

In this case, suppose that the running time of the overall video images is 500 (for example, unit: sec), tag_Schema1 describes a time structure, characteristics description of the whole 0-500 is performed by tag_Schema1 of the upper hierarchy, characteristics descriptions of the first half 0-250 and the second half 250-500 of the video image data are performed by tag_Schema1 of two lower hierarchies, and "inclusion" is specified. In this case, when contents data of time length of 0-500 (sec) shown in Fig. 15C is represented by the tree structure shown in Fig. 15A where the first half 0-250 of tag_Schema1 (1) is tag_Schema1 (21) and the second half 250-500 is tag_Schema1 (22), tag_Schema1 (1) and tag_Schema1 (22) shown by a bold line of a data structure for all characteristics descriptions including running time of 400-450 become a search target. When the search target corresponds to the constraint conditions, a partial tree from the root node to this data structure and a partial tree of this data structure, that is, data including the partial tree up to tag_Schema1(1), part of tag_Schema1 (1), and a partial tree constructed from tag_Schema1 (22) shown in Fig.15B is transmitted to the client.

Further, "internal side" is specified by (time, (tag_Schema1, 200-500, internal side)), a data structure for characteristics description of data with running time inside 200-500, which is in this case only tag_Schema1 (22) becomes a search target. When the search target corresponds to the constraint conditions, a partial tree from the root node to the data structure and a partial tree of the data structure are transmitted to the client. In this case, tag_sc1 of tag_Schema1 (1) is not transmitted.

Examples of constraint conditions for structures for acquisition request include partial tree specification, hierarchy structure specification of a partial tree, time structure specification of a partial tree, and remaining data specification.

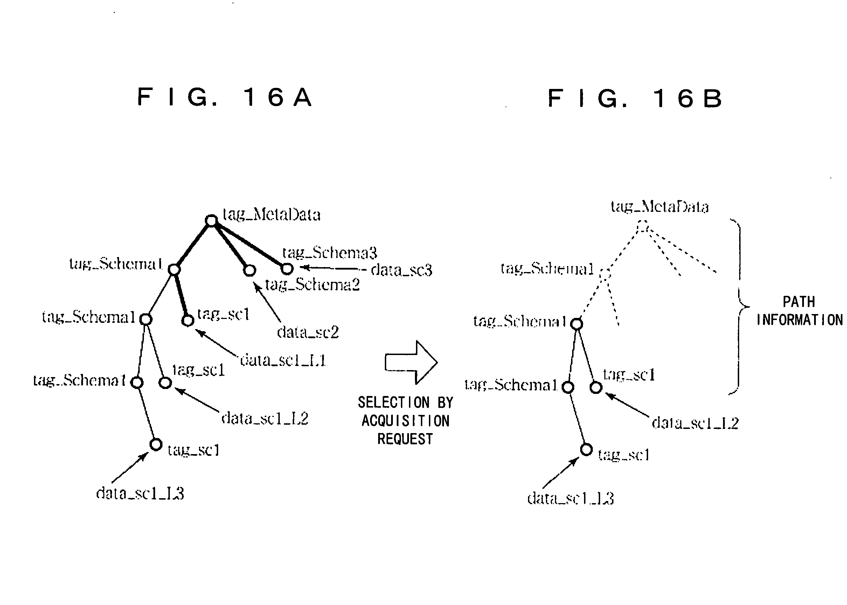

In the partial tree specification, regarding descriptive data of a descriptor desired to be obtained, information for a path to a parent node of the descriptor and information of the descriptor for the sub-node desired to be obtained can be specified. For example, as (constraint type, (path information, (descriptor,...))), or (constraint type, (path information, ALL)), (select, (tag_MetaDatatag_Schema1, (tag_Schema1))) can be used. In this case, in Fig. 16A, regarding nodes attainable via tag_Schema1 after tag_MetaData, all partial trees which its sub-node's tag is tag_Schema1 are obtained. Further, when a part of the bold lines of Fig. 16A has already been obtained, part of thin lines in Fig. 16A becomes an acquisition target. Therefore, the partial tree shown by the full line in Fig. 16B is transmitted to the client.

Regarding the hierarchy structure specification of the partial tree, when a schema of a descriptor requested to be obtained is recursively defined, it is possible to specify a hierarchy from a top level node of the partial tree of the schema (the hierarchy is specified as a relative position or an absolute position).

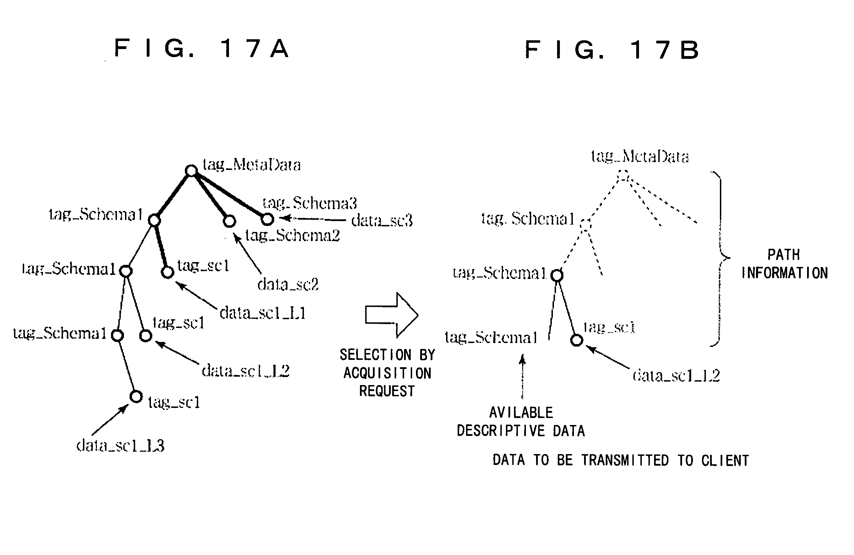

For example, as (constraint type, (path information, (descriptor, hierarchy number),..)), (select_level, (tag_MetaDatatag_Schema1, (tag_Schema1, 1))) can be used. In this case, as shown in Fig. 17A, regarding nodes attainable via tag_Schema1 after tag_MetaData, a partial tree to one hierarchy below tag_Schema1 is obtained among sub-nodes, and path information up to this partial tree, partial tree data, and descriptor information of obtainable descriptive data are transmitted to the client. Further, when a part shown by bold lines of Fig. 17A has already been obtained, a part shown by thin lines becomes an acquisition target. As a result, the obtainable descriptive data shown in Fig. 17B, is transmitted to the client.

Further, regarding the time structure specification of the partial tree, time interval information can be specified for providing structural limits when the schema of a desired descriptor is for structure description relating to a running time axis. For example, as (constraint type, (path information, ((descriptor, time interval information, inclusion/internal side),...))), (select_time, tag_MetaDatatag_Schema1, (tag_Schema1, 100-300, internal side)) can be used.

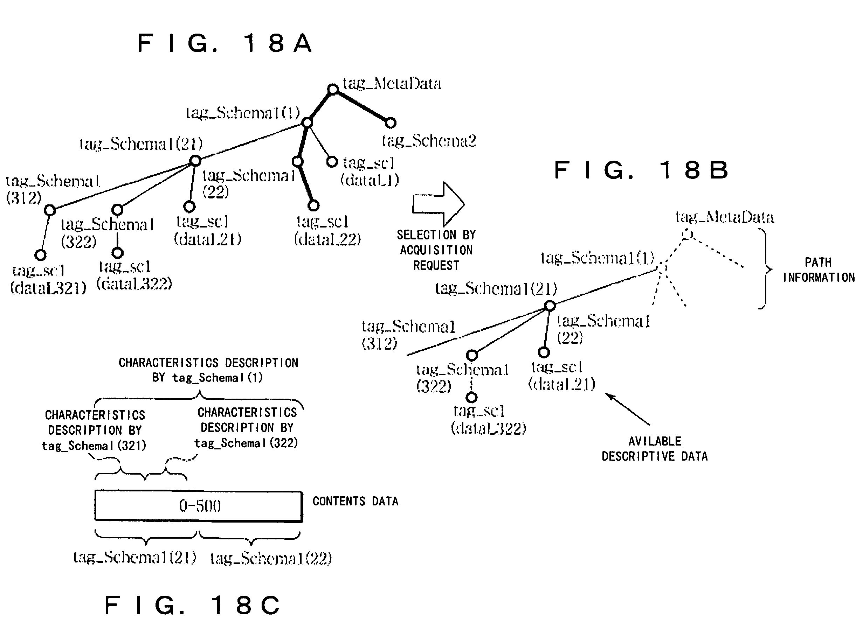

In this case, as characteristics descriptions of contents data having running time of 0-500 shown in Fig. 18C, in addition to tag_Schema1 (21) (of the first half) and tag_Schema1 (22) (of the second half), tag_Schema1 (321) (of the first quarter 0-125) and tag_Schema1 (322) (of the second quarter 125-250) are used, and the characteristics description can be shown as a tree structure in Fig. 18A. When the bold line part is already obtained and the thin line part is an un-obtained part in Fig. 18A, the thin line part shown in Fig. 18B is transmitted to the client. When "internal side" is specified, only tag_Schema1 (322) of the data structure for characteristics description within the running time is extracted. In this case, position information from the root node to the data structure and a partial tree of the data structure are transmitted to the client. When "inclusion" is specified, similarly to the constraint conditions for the structures for search request, all data structures relating to 100-300 except for tag_Schema1 (22) are extracted. In this case, a partial tree from the root node to the data structure and a partial tree of the data structure are transmitted to the client.

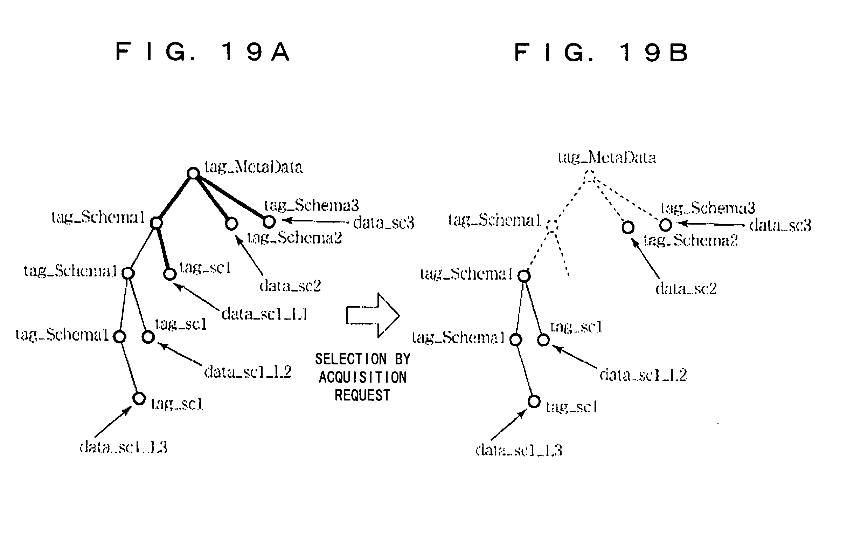

The remaining data specification represents that, regarding a schema of a descriptor desired to be obtained, acquisition request is to be sent for remaining descriptive data other than currently obtained data. For example, as (constraint type, path information), (rest, tag_MetaData) can be used. For example, in the data structure shown in Fig. 19A, when the bold line part has already been obtained, the unbroken line part, which is the result of excluding the broken line part from tag_MetaData of the root node shown in Fig. 19B is transmitted to the client as remaining data.

As described above, constraint conditions for the respective metadata structures can be given to the search request command and the acquisition request command from the client 5. The constraint conditions are generated by the constraint conditions generation processing unit 51 of the client 5 (refer to Fig. 3), and the generated constraint conditions are added to the search request command or the acquisition request command. The metadata filtering processing unit 22 extracts a data structure corresponding to the constraint conditions from the metadata to be searched, and the search server 2 transmits the extracted data structure to the client 5.

On the client 5, the metadata reconstruction processing unit 52 reconstruct the metadata transmitted from the search server 2 through the network. The metadata firstly received from the search server 2 as a partial tree is forwarded to the metadata control unit 53. The metadata subsequently received from the search server 2 as a partial tree is added and updated in the metadata reconstruction processing unit 52, and forward to the metadata control unit 53. Further, in the case of the remaining data specification, the search result data generation processing unit 21 of the search server 2 has a function to control which partial trees are transmitted and which partial trees remain regarding the metadata already transmitted to the client 5. In this way, the remaining data can be transmitted.

Compared to conventional search systems, in the conventional search system, the search request command in the ascending direction from the client to the search server is provided with only logical conditions (search conditions) in the case of a plurality of search words and constraint conditions of search category (schema type) specification, and not provided with constraint conditions for metadata structures. Further, conventional search systems do not comprise a filtering process function to extract partial metadata or a function to transmit information for partial metadata and obtainable metadata based on constraint conditions of structures: Further, conventional search systems cannot obtain partial data extracted based on constraint conditions of structures, regarding the acquisition request command. Further, conventional search systems do not comprise a function for reconstructing a partial tree of the metadata on the client side.

Descriptions will be hereinafter given with reference to a specific implementation.

First, Figs. 20 to 22 shows an example of XML schema definition for metadata. A certain XML schema definition is shown by dividing it into the three views of Figs 20 to 22.

As described above, for example, in the processes of Steps S65, S86, S41, and S42, it is possible to ascertain the existence of an hypothetical partial tree (a partial tree not obtained, which exists under an obtained partial tree) and whether a recursive hierarchical unit exists or not with reference to a XML schema definition.

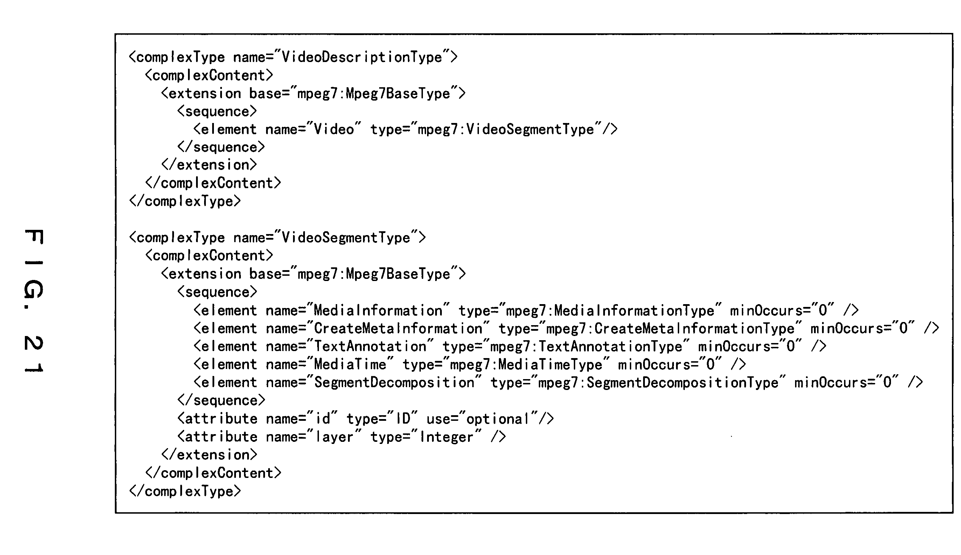

For example, according to the example of the XML schema definition shown in Figs. 20 to 22, first, it is possible to ascertain that the <Video Description> tag, which contains video image characteristic descriptions data exists from the definition of the <Mpeg7Main> tag shown in Fig. 20. Further, it is possible to ascertain that the <Video> tag defined by "Video Segment Type" type exists from the definition of <Video Description Type> type shown in Fig. 21.

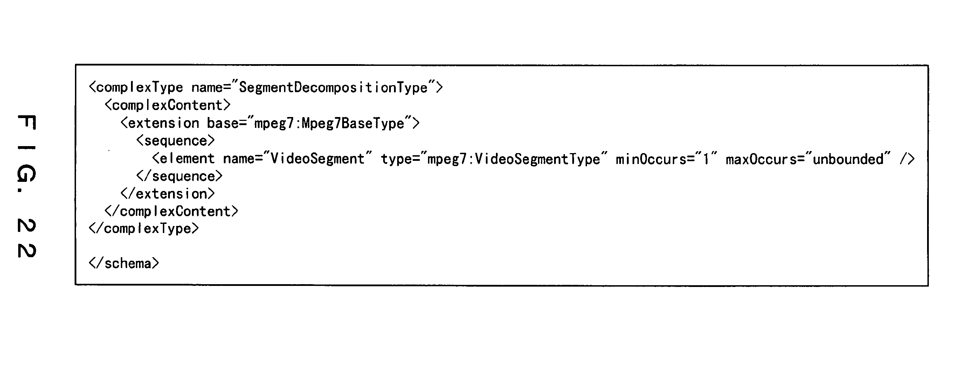

Further, it is possible to ascertain that the <Segment Decomposition> tag defined by "Segment Decomposition Type" type exists from the definition of <Video Segment Type> type shown in Fig. 21. Further, it is possible to know that <Video Segment> tag defined by "Video Segment Type" type exists from the definition of <Segment Decomposition Type> type shown in Fig. 22. Thereby, it can be determined that the "Segment Decomposition Type" type tag and the "Video Segment Type" type tag are recursively defined alternately.

Here, it is possible to consider from "Video Segment Type" type tag to "Segment Decomposition Type" type tag as one hierarchical unit. In the example of Fig. 23, the first "Video Segment Type" type tag is the <Video> tag. One hierarchy (first layer) is formed from this <Video> tag to the <Segment Decomposition> tag, the "Segment Decomposition Type" type tag. Similarly, one hierarchy (second layer) is formed from <Video Segment> tag, the next "Video Segment Type" type tag to <Segment Decomposition> tag nested therein. Though not shown, the third layer and below are similarly formed.

Therefore, when a schema definition of certain metadata is the defined like the example shown in Figs. 20 to 22, it is determined that recursive hierarchical units exist in the processes of Steps S41 and S42.

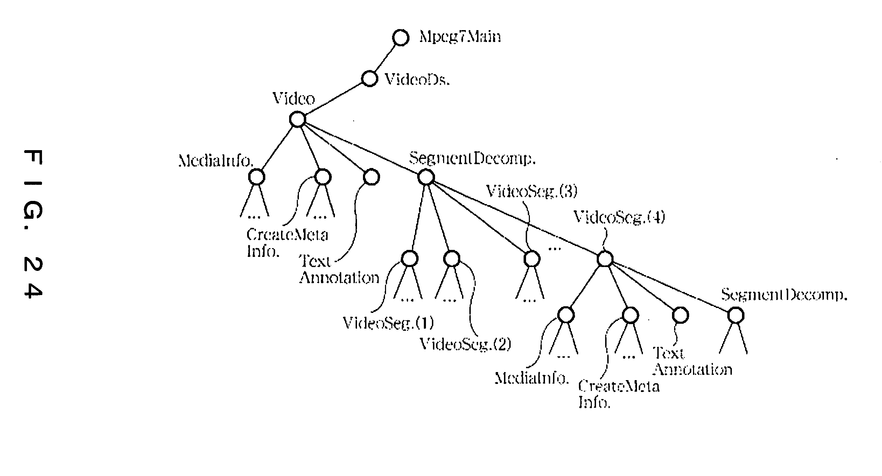

Fig. 23 is an drawing of 10 minutes of video image characteristic description metadata. Fig. 24 shows an outline of the metadata as a tree structure.

Each descriptor (tag) shown in Fig. 23 is as defined in the foregoing Figs. 20 to 22. That is, in Fig. 23, <Mpeg7Main> is a descriptor (tag) for declaring that characteristics descriptions will be performed for the video image data by a MPEG7 schema. The <VideoDescription> descriptor of the next hierarchy declares that characteristics descriptions will be performed for contents whose media type is video image data under the MPEG7 schema.

Further, a description, <Video>, performing characteristics description for all the video images is declared as a lower layer under <VideoDescription>.

Fig. 23 shows a case, wherein <Video> includes id="RootSegment" layer="1" as an array. Further, Fig. 23 shows a case, wherein this <Video> includes:
<MediaInformation> for describing information on whereabouts of an entity of the video image data, and the like;
<CreateMetaInformation> for describing title text, performer names, category name, representative thumb-nail, outline sentence, date of creation of metadata and the like;
<MediaTime> for describing running time of the video images;
<TextAnnotation> for describing a comment sentence for the video images; and
<SegmentDecomposition> for describing the video image data by structuralizing the video image data along a time axis.

Further regarding this <SegmentDecomposition>, it is possible to perform characteristics description for the video image data in units of plurality of segments by describing a plurality of <VideoSegment> capable of being described as in <Video> according to a time axis, except for <MediaInformation>. Therefore, <VideoSegment> is recursively defined, and includes <SegmentDecomposition> as an lower hierarchy thereunder (as described above, based on the schema definition of Figs. 20 to 22).

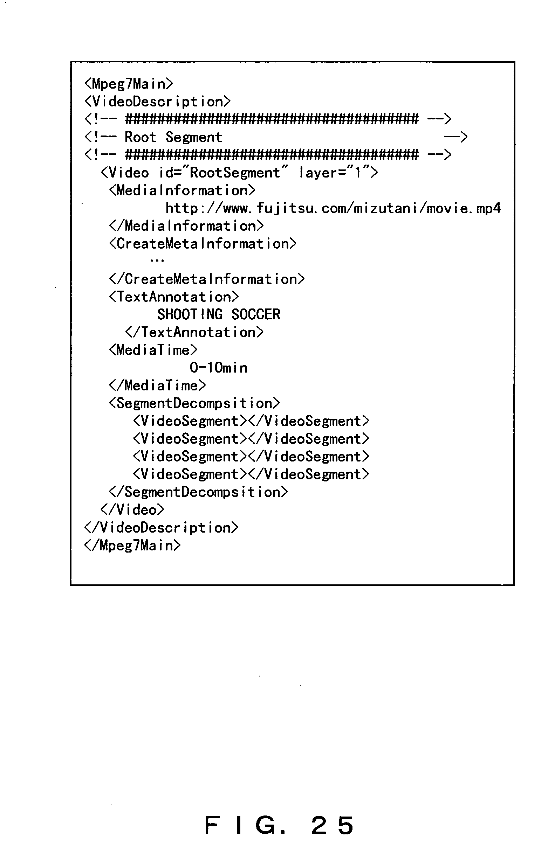

Fig. 25 shows an example of partial metadata (initial partial metadata) sent back to the client 5 after the metadata shown in Fig. 23 is provided with the filtering process responding to the search request command.

Fig. 25 shows partial metadata in the case wherein up to the first layer (layer="1") is specified in hierarchy specification as constraint conditions.

In this case, metadata wherein data of the second layer (layer="2") and below is deleted is transmitted to the client. However, regarding the second layer, only the tags (descriptor) are transmitted. That is, regarding <VideoSegment id="seg1" layer="2"> ... <VideoSegment id="seg4" layer="2">, only each tag is transmitted.

When the metadata shown in Fig. 25 is received at the client 5 side, it is possible to ascertain that four sub-nodes (nested tag) exist in <SegmentDecomposition>, and their type is <VideoSegment>. Further, it is found that there is a possibility that an hypothetical partial tree may exist, since it is found that as described above the "Segment Decomposition Type" type tag and the "Video Segment Type" type tag are recursively defined alternately with reference to the schema definition of the foregoing Figs. 20 to 22.

Thereby, for example, as shown in Fig. 26, it is possible to obtain the hypothetical partial tree by expressing position information and type information of the foregoing hypothetical partial tree by Xpath, and transmitting them to the search server 2 in the foregoing Fig. 11. (In this example, the four sub-nodes are all specified. However, needless to say, it is also possible to specify one, two or three sub-node(s).)

Xpath shown in Fig. 26 is, for example, <Request="/Mpeg7Main/VidoDescription/Video/Segment Decomposition/VideoSegment" Num="1">. Num="1" means that the first tag is specified among the four <VideoSegment> tags.

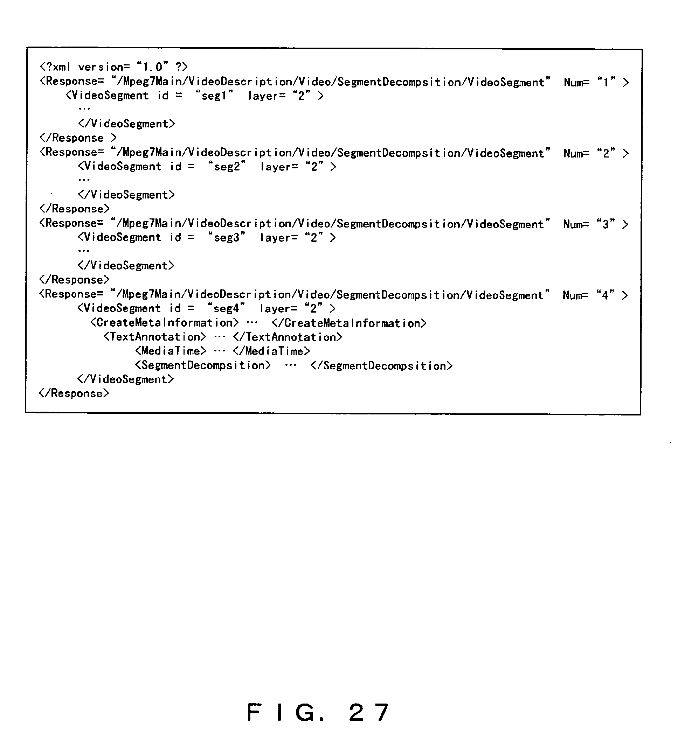

Fig. 27 shows data sent back from the search server 2 responding to the request of Fig. 26. As shown in the figure, the returned data includes Xpath, shown in Fig. 26 and data of a partial tree obtained responding thereto. In the process of Step S84 of Fig. 12, it is possible to ascertain where the obtained partial tree should be combined in existing metadata by comparing the Xpath to the existing metadata stored in the metadata control unit 53.

Further, though not shown, when the obtained partial tree includes only the third layer tag, position information and a node type of this hypothetical sub-node are extracted and recorded by the processes of Steps S86 and S87 of Fig. 12.

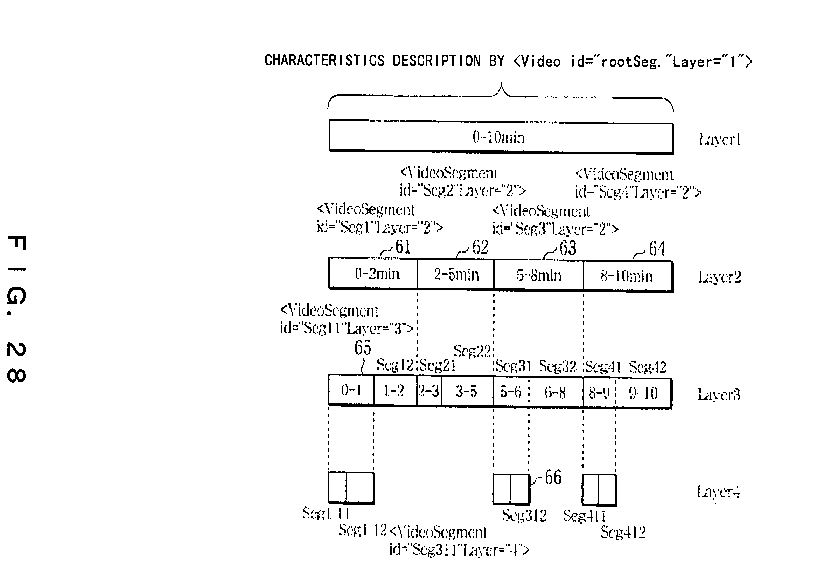

The foregoing characteristics description for the video image data can be expressed as a hierarchy structure along a time axis, for example, as shown in Fig. 28. That is, Fig. 28 shows hierarchies of Layer 1 to Layer 4 in the case that running time 0-10 (min) described by the foregoing <MediaTime> is segmented into a plurality of segments, which are repeatedly segmented to obtain a hierarchical structure. Segment 61 of 0-2 (min) to Segment 64 of 8-10 (min) in Layer 2 are described by <VideoSegment id="Seg1" Layer="2"> to <VideoSegment id="Seg1" Layer="4">. Segment 65 of 0-1 (min) in Layer 3 is described by <VideoSegment id="Seg11" Layer="3">.

Further, Segment 66 in Layer 4 is described by <VideoSegment id="Seg311" Layer="4">.

The foregoing metadata for the video image data for 0-10 minutes is about 50 kB. Further, the data volume sent back from the search server 2 to the client 5 responding to the search request added to the foregoing constraint conditions is significantly reduced. Further, the search result can be immediately displayed at the client, and browsing of the video image data in a hierarchical fashion is facilitated. Further, also regarding long-time (duration) video image data, it becomes possible for the client to search the data according to desired constraint conditions by adopting characteristics description by using segments of an introduction part, a plurality of intermediate parts, and an ending part, and adopting a hierarchical structure. Further, search request and the like including performer name and time structure specification specifying when the performer is to perform become possible. Further, it is possible to specify and search metadata of characteristics description of a specific scene of the video image data, and identify a contents server retaining the video image data based on the search result thereof. Further, characteristics description of the segment can include a representative image of the video image (static image or digest video image).

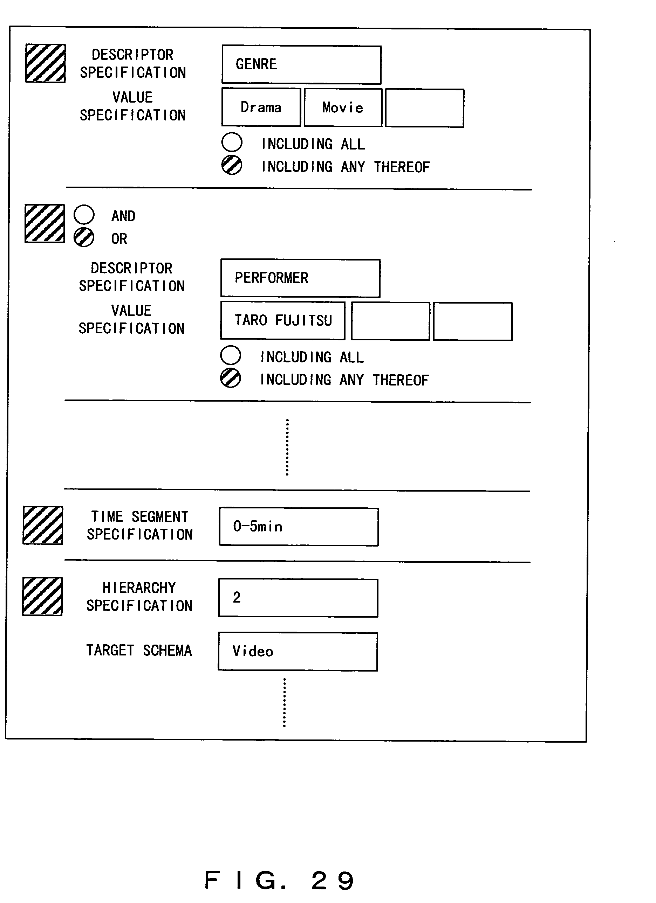

Fig. 29 is an explanation drawing of GUI (Graphical User Interface) of the client. Example categories of video image data are drama or movie. Video image data in which Taro Fujitsu, the performer is performing for the first five minutes or so is desired to be obtained. Regarding the obtained video image data, an input screen is shown for the case that details at one hierarchical level lower is desired. Based on the input screen, an acquisition request command to which constraint conditions of scope specification: (scope, Video OR VideoSegment OR category OR performer) and time structure specification: (time, (Video, 0-5 min, inclusion), (VideoSegment, 0-5min, internal side)) are added as search conditions from the foregoing constraint conditions for the structures is sent from the constraint conditions generation processing unit 51 (refer to Fig. 3) to the search server.

The search server 2, for example, executes search by keywords about category and performer of <CreateMetaInformation>, in terms of structures of <Video> and <VideoSegment> under time structure constraint conditions of 0-5 (min) of the metadata of Fig. 28. Then, when Segment "seg11" corresponds with category of "Drama/Movie" and performer of "Taro Fujitsu," the search server 2 sends only the partial tree up to the hierarchy of <Video> to the client 5.

Regarding other descriptors or descriptive data that can be continuously added to this partial tree, search is enabled up to attaining the node of <VideoSegment> of the hierarchy corresponding with the search conditions by request from the client 5 and browsing. In this case, if the number of nodes of all <Video> and <VideoSegment> is 19, a volume one node becomes about 2.5 kB. It becomes possible to present the top level outline image to users by forwarding about 2.5 kB of data.

Further, by the display template selection processing unit 23 (refer to Fig. 2) of the search server 2, for each schema of the metadata to be transmitted to the client 5, display template data appropriate for displaying the schema is selected from the metadata display template database 6 and transmitted as search result data along with the metadata. This is effective for the case that an application of the client 5 is a WEB browser for determining a display form by using display template data such as XSL (extensible Style Language), not for the case that the application of the client 5 is an exclusive browser for a specific schema. In this case, the display template data is controlled by the display template data control unit 54 (refer to Fig. 3) of the client 5 and when browser display data is generated in the display data generation processing unit 55, it is possible to generate the display data by using the display template data along with the metadata controlled in the metadata control unit 53.

Fig. 30 is an explanation drawing of the display template data. 71 to 73 represent examples of display screens. Responding to the metadata acquisition request (search request command), metadata 74 and display template data 75 for selectively displaying video image hierarchy are sent back from the search server 2. The client 5 receives the metadata 74 and the display template data 75, and thereby the display screen 71 including the whole summary, the first half summary, and the second half summary can be constructed. Then, when the first half summary is selected and metadata acquisition request (acquisition request command) is sent to the search server 2, the search server 2 returns metadata 76. Thereby, the client 5 can construct the display screen 72 including 1/4 summary and 2/4 summary, which are hierarchies below the 1/2 summary (first half summary) . Actual data sent back in the shown metadata 76 is a part of partial tree 76a.

Further, when 1/4 summary is selected and a metadata acquisition request is sent, metadata 77 including color histogram data 77b of the key frame and display template data 78 for graph display are returned by the search server 2. The client 5 receives the metadata 77 and the display template data 78, and constructs the display screen 73 to display color histogram 73a of the key frame. The actual data sent back in the shown metadata 77 is a part of partial tree 77a.

Further, for example, when metadata for a partial image produced by segmenting one screen is received from the search server 2 responding to the search request to which constraint conditions are added, and further metadata for a partial image in the periphery thereof is received from the search server 2 according to the search request to which subsequent constraint conditions are added, the metadata reconstruction processing unit 52 of the client 5 reconstructs one screen or a partial image combining a plurality of partial images based on position information and the like of each partial image. Therefore, it is applicable to browsing by sequentially obtaining periphery partial images when it is not possible to identify whether it is a desired video image data or not from a single partial image.

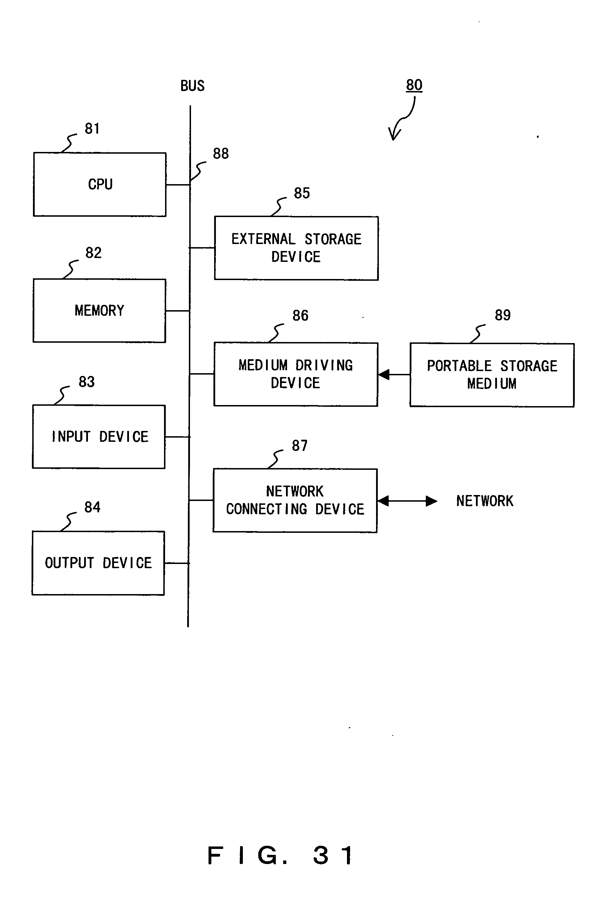

Fig. 31 shows an example of a hardware construction of a computer for realizing the foregoing various processes (search server 2 or client 5).

A computer 80 shown in Fig. 31 has a CPU 81, memory 82, an input device 83, an output device 84, an external storage device 85, a medium drive device 86, a network connection device 87 and the like, which are connected to a bus 88. The construction shown in the Fig.31 is only an example, and the invention is not limited to this example.

The CPU 81 is a central processor for controlling the whole computer 80.

The memory 82 is memory such as RAM for temporarily storing a program or data stored on the external storage device 85 (or portable recording medium 89) when the program is executed, the data is updated or the like. The CPU 81 executes the foregoing various processes by using the program/data read into the memory 82.

The input device 83 is, for example, a keyboard, a mouse, a touch panel or the like.

The output device 84 is, for example, a display, a printer or the like.

If the computer 80 is the search server 2, it is possible that the computer80 has no input device 83 and/or output device 84.

The external storage device 85 is, for example, a hard disc device or the like. The external storage device 85 stores a program/data or the like for realizing the foregoing various functions (for example, programs or the like to enable the computer to execute the respective processes shown in Figs. 5 to 12). The program/data and the like are stored on the portable recording medium 89. It is possible that the medium drive device 86 reads the program/data and the like stored on the portable recording medium 89, and the foregoing various processes are executed by the computer 80. The portable recording medium 89 is, for example, a FD (flexible disc), a CD-ROM, a DVD, a magnetic optical disc or the like.

The network connection device 87 enables transmission and reception of programs/data and the like between the computer and external information processors by connecting to a network (Internet or the like).

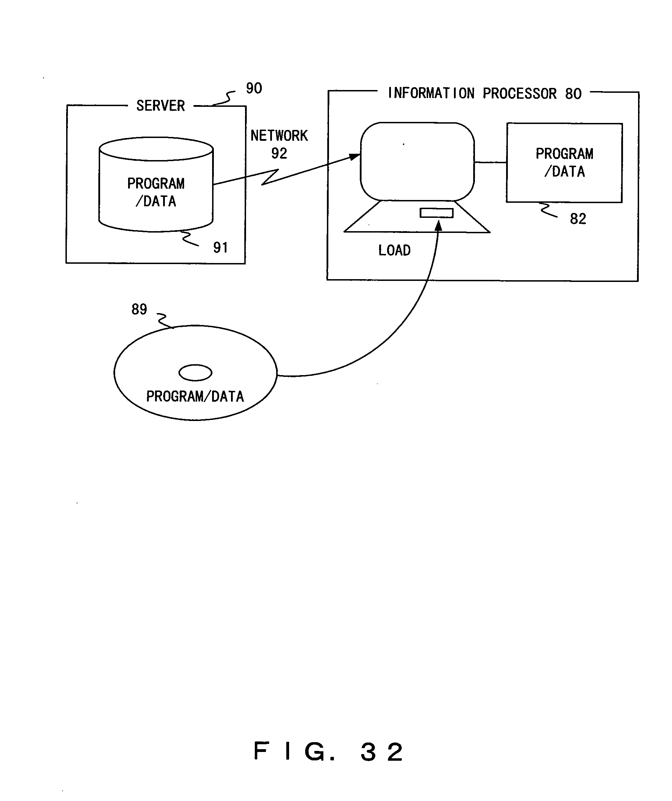

Fig. 32 is a view showing an example of a recording medium wherein the foregoing program is recorded or downloaded.

As shown in Fig. 32, it is possible to read the program/data and store the read program/data in the memory 82 by, for example, inserting the portable recording medium 89 into a drive, wherein the program/data for realizing the foregoing functions of the invention is stored into a main body of the information processor 80. Otherwise, it is possible to download a program/data 91 stored in a server 90 on an external program/data provider side through a network 92 (Internet or the like) connected by the network connection device 87.

Further, the invention can be constructed not only from a device/method, but also from a recording medium (portable recording medium 89 or the like) storing the foregoing program/data, or also from the program itself. Otherwise, the invention can be constructed from the program (transmission signals) itself downloaded through the foregoing network.

### Industrial Applicability

As described above, in the invention, a search request to which various constraint conditions are added is transmitted from a client to a search server, and responding to this search request, the search server searches a database and transmits search result data after performing filtering process corresponding to the constraint conditions for a search result to the client. Since unnecessary descriptors, descriptive data and the like are not transmitted, there is an advantage that a communications volume between the search server and the client can be reduced. In particular, when conditions for metadata structures (in particular, time structure, hierarchy structure and the like) are used as constraint conditions, only the part the client side really needs is easily obtained.

Further, the database has a construction wherein metadata in which characteristics descriptions are performed for segments segmentalized in hierarchical fashion for contents retained in a contents server is stored with keywords. Since filtering process is provided according to the constraint conditions in the server when various video image data is searched, bare minimum of data volume can be transmitted to the client. It is advantageous that the client can sequentially search toward more detailed contents. Therefore, it is possible to enable quick browsing for the client, and also to reduce a system load by applying the invention to search of video image data.

## Claims

1. A search processing system, comprising:
a database for storing each metadata wherein characteristics descriptions for each contents that a contents server holds is performed; and
a search server for, responding to a search request from any given client, obtaining metadata corresponding to search conditions included in the search request from the database, extracting part of the obtained metadata according to constraint conditions included in the search request, and transmitting part of the metadata as a search result to the client.

2. The search processing system according to claim 1, wherein the client comprises a constraint conditions generation processing unit for adding constraint conditions for metadata structures to the search request.

3. The search processing system according to claim 1, wherein
the characteristics description is expressed as a hierarchical structure along a time axis, and wherein
the constraint conditions generation processing unit of the client comprises a construction for generating constraint conditions for performing scope specification including a schema type to be searched and logical conditions of the schema type, hierarchy structure specification for specifying a hierarchy from a top level of a schema, and time structure specification relating to a time axis of a scope-specified schema.

4. The search processing system according to claim 1 or claim 2, wherein the client comprises a metadata reconstruction processing unit for combining a logical partial tree regarding the metadata as the search result from the server.

5. The search processing system according to any of claims 1 to 4, wherein the metadata reconstruction processing unit of the client comprises a construction for performing reconstruction by combining the logical partial tree of the metadata from the search server and a partial tree of the metadata already received.

6. The search processing system according to any of claims 1 to 5, wherein the search server comprises a display template selection processing unit for selecting and transmitting display template data defining a display form of a schema for each schema type of the metadata transmitted to the client.

7. A search processing method for searching a database by a search server responding to a search request from a client and transmitting a search result to the client, including a step wherein
the client transmits the search request to which constraint conditions for metadata structures are added to the search server, and wherein
the search sever searches the database according to the search request from the client and transmits a result from performing a filtering process based on the constraint conditions for metadata of the search result as search result data to the client.

8. The search processing method according to claim 7, wherein the constraint conditions added to the search request by the client include one or a plurality of logical conditions specification, scope specification for specifying a schema type, hierarchy specification of a schema of a hierarchy structure, and time interval specification of the schema.

9. The search processing method according to claim 7 or claim 8, wherein the constraint conditions added to the search request from the client include one or a plurality of partial tree specification for path information to a parent node and a sub-node as a partial tree of a schema of a hierarchical structure, hierarchy structure specification of the partial tree, time structure specification of the partial tree, and remaining data specification representing acquisition of remaining metadata other than obtained metadata.

10. The search processing method according to any of claims 7 to 9, wherein the search server includes a step, wherein when a structure of metadata according to the constraint conditions of the client becomes a partial tree, the metadata of the partial tree to which position information of the partial tree and information of a sub-node from the partial tree are added is transmitted.

11. The search processing method according to any of claims 7 to 10, wherein the client includes a step for reconstructing a plurality of metadata corresponding to the partial tree from the server based on the position information of the partial tree.

12. The search processing method according to any of claims 7 to 11, wherein the search server includes a step for sending the search result to which display template data corresponding to a schema type of metadata provided with a filtering process according to the constraint conditions of the client is added to the client.

13. A search server, comprising:
a filtering processing unit, wherein when responding to a search request from a client comprising search conditions and constraint conditions, metadata corresponding to the search conditions is searched from metadata in which characteristic descriptions for each contents is performed, part of the metadata is extracted according to the constraint conditions for each metadata as searched; and
a search result data generation processing unit for sending the partial metadata extracted by the filtering processing unit as a search result to the client.

14. The search server according to claim 13, wherein
the constraint conditions comprise conditions for the metadata structures, and wherein
the filtering processing unit extracts a part satisfying conditions for the metadata structures in the metadata.

15. The search server according to claim 13 or claim 14, wherein
the characteristic descriptions is expressed as a hierarchical structure along a time axis, and wherein
the constraint conditions include one or a plurality of scope specifications for specifying a schema type, hierarchy structure specifications for specifying a given hierarchy of the hierarchical structure, and time structure specifications for specifying a given time zone of the time axis.

16. The search server according to any of claims 13 to 15, wherein
the filtering processing unit sends the partial metadata including information showing existence of an hypothetical partial tree to the client, and wherein
when an acquisition request including path information showing a position of the hypothetical partial tree in the metadata and constraint conditions is sent from the client, the filtering processing unit extracts part or all of remaining data of the metadata responding to the acquisition request.

17. The search server according to any of claims 13 to 16, further comprising a display template selection processing unit for selecting and transmitting display template data for defining a display form of a schema for each schema type of the metadata transmitted to the client.

18. A client, comprising a constraint conditions generation processing unit for adding constraint conditions for metadata structures to a search request sent for searching desired metadata from metadata wherein characteristic descriptions for each contents that a contents server serves is performed.

19. The client according to claim 18, wherein the constraint conditions generation processing unit generates one or more scope specifications for specifying a schema type, hierarchy structure specification for specifying a hierarchy from the top level of a schema, and time structure specification for specifying a time range as the constraint conditions.

20. The client according to claim 18 or claim 19, further comprising a metadata control unit for storing partial metadata sent from a search server responding to the search request, wherein
the constraint conditions generation processing unit specifies a given partial tree to be obtained in remaining metadata and constraint conditions based on the partial metadata, and sends an acquisition request command including a position of the partial tree to be obtained and the constraint conditions to the search server.

21. The client according to any of claims 18 to 20, further comprising a metadata reconstruction processing unit for performing reconstruction by combining a partial tree sent back from the search server responding to the acquisition request command with the obtained partial metadata stored in the metadata control unit.

22. A computer-readable storage medium storing program used to direct a computer to perform:
a function, wherein when responding to a search request from a client comprising search conditions and constraint conditions, metadata corresponding to the search conditions is searched from metadata wherein characteristic descriptions for each contents is performed, part of the metadata is extracted according to the constraint conditions for each metadata as searched; and
a function for sending the extracted partial metadata to the client as a search result.

23. The storage medium according to claim 22, wherein
the constraint conditions comprise conditions for metadata structures, and wherein
the function for extracting part of the metadata extracts a part satisfying conditions for the metadata structures in the metadata.

24. The storage medium according to claim 22 or claim 23, further comprising a function, wherein when an acquisition request including path information and constraint conditions is sent from the client after the partial metadata is returned to the client, part or all of remaining data of the metadata is extracted responding to the acquisition request.

25. A search processing system comprising a search server for searching a database according to a search request from a client, wherein
the database comprises a construction wherein metadata in which characteristics description of segments obtained by segmentalizing data of a contents server in a hierarchical fashion is performed is stored with keywords, and wherein
the search server comprises a filtering processing unit for sending a search result obtained from searching the database according to the search request to which constraint conditions are added from the client, and providing a filtering process according to the constraint conditions to the client.
